Europäisches Patentamt

European Patent Office

Office européen des brevets

(11) Publication number: **0 074 841**
**B1**

## EUROPEAN PATENT SPECIFICATION

(45) Date of publication of patent specification: **27.12.90**

(51) Int. Cl.⁵: **G 11 B 27/32,** G 11 B 27/024

(21) Application number: **82304820.2**

(22) Date of filing: **13.09.82**

(60) Divisional application 89100243.8 filed on 13/09/82.

(54) **Recording and using cue data.**

(30) Priority: **14.09.81 JP 145286/81**

(43) Date of publication of application:
**23.03.83 Bulletin 83/12**

(45) Publication of the grant of the patent:
**27.12.90 Bulletin 90/52**

(84) Designated Contracting States:
**AT CH DE FR GB IT LI NL**

(56) References cited:
DE-A-2 907 834    US-A-3 950 782
FR-A-2 045 304    US-A-4 224 644
FR-A-2 482 757

IBE INTERNATIONAL BROADCAST ENGINEER,
vol. 12, no. 176, March 1981, pages 8-12, Eton,
Berks, GB; M. SALTER: " 'C' Format - the fourth
dimension"

NEUES AUS DER TECHNIK, no. 4/5, 1st
September 1977, page 4, article no. 411,
Würzburg, DE; "Verfahren zum Zufügen von
Dateninformation zu einer Videoplatte"

(73) Proprietor: **SONY CORPORATION**
**7-35 Kitashinagawa 6-Chome Shinagawa-ku**
**Tokyo 141 (JP)**

(72) Inventor: **Ohtsuki, Tadashi**
**103-28 Zenbu-cho Asahi-ku**
**Yokohama-shi Kanagawa-ken (JP)**

(74) Representative: **Thomas, Christopher Hugo**
**et al**
**D Young & Co 10 Staple Inn**
**London WC1V 7RD (GB)**

(56) References cited:
ELECTRO/81 CONFERENCE RECORD, vol. 6,
7th-9th April 1981, pages 1-9, New York, US;

H.F. OLIJHOEK et al.: "Mastering technology for
the Philips optical disk systems"

SMPTE JOURNAL, vol. 89, August 1981, pages
669-677, Scarsdale, New York, US; T. DOI et al.:
"Digital audio formats for recording and digital
communication"

SMPTE JOURNAL, vol. 88, no. 12, December
1979, pages 831-834, Scarsdale, New York, US;
H.-D. GEISE: "The use of microcomputers and
microprocessors in modern VTR control"

EP 0 074 841 B1

## Description

This invention relates to recording and using cue data.

Thus, some embodiments of the invention may comprise apparatus which records cue data representative of predetermined characteristics of information recorded in tracks on a magnetic tape, which cue data is useful in identifying the type and location of recorded information. Other embodiments may comprise recording apparatus for recording cue data that identifies and relates to audio programme information on a magnetic tape, or cue data recording apparatus for recording cue data of the aforementioned type on a record disc so as to facilitate the selection of desired programmes to be played back from that disc.

The cue data may, for example, relate to the content, quantity or quality of programme information that is recorded on a record medium such as a magnetic tape. Such programme information may be a video programme or an audio programme. Moreover, the record medium may, for example, be a magnetic tape, a magnetic disc, a video disc or a digital audio disc (sometimes known as a DAD or an audio PCM disc).

Conventionally, audio discs have analog audio information recorded therein in the form of undulations in a spiral groove. Such undulations are sensed by a stylus of a playback device. Typically, the stylus is coupled to a magnetic sensor, or cartridge, whereby the mechanical motion of the stylus is converted to an electrical signal, and this electrical signal is ultimately converted into audible sound. Recently, it has been proposed to digitize audio information, and to record the digital audio signals directly on a disc. The digital signals are sensed, or played back, by an optical means such as a scanning laser beam. The reproduced digital signals are then re-converted back to audio signals which are used to generate corresponding sounds. Many advantages arise from the digital recording of audio information, such as markedly improved fidelity to the original audio signals, and the ability to produce high-density digital audio discs which contain a large quantity of information and thus permit relatively long playback times. Moreover, since the playback "head" need not be in physical contact with the disc, the disc will be subjected to virtually no wear, and also selected portions or programmes can be rapidly accessed for reproduction.

In digitizing the audio information to be recorded, analog audio signals are generally sampled, and each sample is converted to a digital signal, such as a pulse code modulated (PCM) signal. This technique, which may be altered and modified in various respects, has given rise to the designation of the audio PCM disc.

To ensure proper playback of the audio information, various synchronizing and control signals are also recorded on the disc, and these signals are preferably multiplexed with the digital audio signals. The use of digital techniques enables at least some of the control signals to function as cue signals by which the playback equipment, editing equipment or the like is "cued" to carry out various functions. For example, the cue signals may represent the identity of the audio information programme which is recorded, the length of that programme, the number of programmes recorded on a disc, the location of the end of a programme, the composer, author or performers of a programme, and various movements of that programme (particularly where such programmes are musical performances). Moreover, if the audio PCM disc is used in conjunction with, for example, a display device, such as a line or text display, the latter can be controlled or synchronized with the reproduced audio information as a function of the cue signals on the disc. Still further, if the programme information can be recorded in various different modes or formats, the cue data can identify such modes or formats so as to condition the playback apparatus to be compatible therewith.

Many of the techniques which have been used to produce conventional analog audio record discs can also be used to produce audio PCM discs. For example, a so-called "master tape" may be prepared by recording the audio information on a magnetic tape; and this master tape may then be used to produce a "mother" disc or a "stamper" disc from which replica discs are made and ultimately sold to customers. In order to record the cue signals on replica audio PCM discs, it is desirable to have the cue signals recorded on the master tape. Usually, however, the master tape on which the audio PCM signals are recorded is not provided with all of the requisite cue signals which are to be recorded on the audio PCM discs or which are helpful in producing such discs. Typically, the master tape is a video tape on which the audio PCM signals are recorded in pseudo-video format. That is, the audio PCM signals are recorded by a helical scan video tape recorder (VTR) in parallel, skewed tracks on a magnetic tape, accompanied by synchronizing signals which are analogous to the conventional horizontal and vertical synchronizing signals normally provided in television signals. Also, and as is conventionally recorded by VTRs, so-called time code signals are recorded on the magnetic tape to indicate the relative location on the tape at which the respective tracks are found. Such time code signals facilitate rapid access to desired portions on the tape, and are useful in editing operations. The techniques of, for example, time code recording and editing are quite useful in preparing master tapes for audio PCM recording.

An article by Salter 'C-Format — the Fourth Dimension' in IBE International Broadcast Engineer, Volume 12, No 176 (1981.03), pages 8 to 12 and US patent specification US-A-4 224 644 disclose editing methods and apparatus for tape recorders, and the disclosure in the article by Salter corresponds generally to the pre-characterizing part of claim 1 below. An article 'Ver- fahren zum Zufugen von Dateninformation zu einer Videoplatte' in Neues aus der Technik (1977.09), page 4, article 411 discloses apparatus using cue data for making a video disc.

According to the present invention there is provided apparatus for generating data identifying predetermined characteristics of information recorded in tracks on a recording medium and for recording said data other than in said tracks in which said information is recorded, the apparatus comprising:

reproduced signal input means for receiving played back information from said recording medium;

code signal means for deriving code signals which sequentially change in accordance with the position on said recording medium, and including code signal playback means for playing back said code signals from said recording medium;

cue signal generating means for generating respective cue signals upon the occurrence of respective ones of said predetermined characteristics in said played back information;

memory means for storing said code signals and said cue signals; and

formatting means for producing said data in a predetermined format in accordance with the stored said code signals and said cue signals;

said cue signal generating means including keyboard means including manual switch means having a plurality of switches selectively manually operable by an operator when said operator detects respective ones of said predetermined characteristics in said played back information to generate a respective cue signal, and keys selectively manually operable by said operator to generate respective code signals;

characterized by:

said data indicating the relation between occurrences of predetermined characteristics of said information and time information;

selecting means for selecting a real time mode or an edit mode, wherein in said real time mode, said respective cue signals are generated and stored in said memory means together with said code signals from said code signal means, upon operation of said respective ones of said plurality of switches simultaneously as said played back information is monitored, and wherein, in said edit mode, said respective cue signals are generated and stored in said memory means upon operation of said respective ones of said plurality of switches and keys or operation of said keys.

The invention will now be described by way of example with reference to the accompanying drawings, in which:

Figures 1A and 1B are schematic representations of the cue data and information, such as audio PCM information signals, recorded on a record disc;

Figures 2A to 2C are schematic representations of the cue data that is recorded on, for example, a magnetic tape;

Figures 3A to 3C are timing diagrams which are useful in understanding what is represented by some of the cue data;

Figure 4 is a schematic representation of a portion of a master magnetic tape;

Figures 5 to 7 are block diagrams of different examples of apparatus which is used to record cue data on the magnetic tape;

Figures 8A to 8E schematically represent the format of the cue data which is recorded on the magnetic tape;

Figures 9A to 9B together form a block diagram of a cue data editor;

Figure 10 is a schematic, plan illustration of a cue editor keyboard; and

Figures 11A to 11E are timing diagrams which are useful in understanding typical operations of the keyboard shown in Figure 11.

As will become apparent from the following description, the invention relates to the recording of cue data that is useful in representing predetermined characteristics of virtually any type of information. One advantageous use of such cue data is to represent different portions and characteristics of, for example, audio programmes which are recorded on an audio PCM disc. However, the invention is not limited solely to record discs or to audio PCM signals recorded on such discs. Nevertheless, the invention will be understood by describing it in the context of audio PCM signals which are recorded first on a so-called master tape and from which master tape audio PCM disc are subsequently produced.

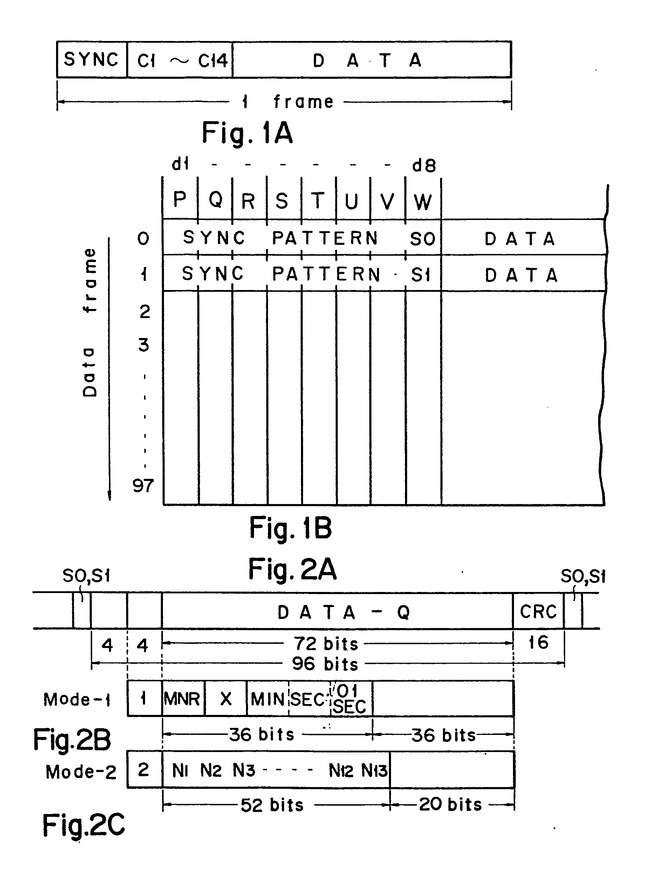

Referring to Figure 1A, there is schematically illustrated the format of a "frame" of signals which are recorded in, for example, one track of an audio PCM disc. The frame of signals includes data information, such as audio PCM signals, which are preceded by a synchronizing signal, or pattern, disposed at the beginning or "head" of the frame, followed by cue signals which, in one example, are represented as 14-bit cue signals C1 to C14. In the example described herein, the 14-bit cue signal is formed by multiplexing individual bits of respective cue data channels. More particularly, eight cue channels may be provided, and the 14-bit cue signal is formed by selecting one bit from each of these eight cue channels, and then converting the resultant 8-bit cue signal to a 14-bit cue signal. Such an 8/14 bit conversion is helpful in improving noise immunity of the digital signal.

Figure 1B represents ninety-eight successive data frames, each frame having the format illustrated in Figure 1A. It is seen herein that eight cue channels are provided, these cue channels being represented as channels P, Q, R . . . . W. Examples of the P-channel cue data and the Q-channel cue data are described below. These channels represent predetermined characteristics of the information with which they are recorded. For example, in an audio PCM recording system, the information is formed of audio information, such as musical programmes. The P-channel and Q-channel cue signals may represent the beginning, end and certain intermediate portions of each musical programme. As will be described, the P-channel cue data merely represents the occurrence of, for example, the beginning and end of a music programme. The Q-channel cue data represents the beginning, end and intermediate portions of each music programme, as well as the relative location on the record medium of the beginning, end and intermediate portions. The remaining R-channel, S-channel ... W-channel cue signals may represent the title of audio or music programmes, textual information relating to those programmes, the performers of those programmes, and other data associated with such programmes, as may be desired.

In the format illustrated in Figure 1B, the information (for example, audio PCM signals) recorded in data frame 0 are preceded by eight multiplexed bits (which subsequently are converted into a 14-bit character) consisting of, for example, the 0th bit from each of the P-channel, Q-channel ... W-channel. Preferably, the eight bits d1 to d8 in data frame 0 form a synchronizing pattern referred to as sync pattern S0. The next-following data frame 1 consists of useful data (for example, audio PCM signals) preceded by the first bit in each of the P-channel, Q-channel ... W-channel. These multiplexed first bits d1 to d8 form another synchronizing pattern which is identified as sync pattern S1. Likewise, in next-following data frame 2, the data is preceded by the second bit in each of the P-channel, Q-channel, ... W-channel. These multiplexed bits form the cue signal d1 to d8. The remaining data frames 3 to 97 are each of a similar format to that shown in Figure 1B and just described.

Each data frame shown in Figure 1B is re-formatted to the format shown in Figure 1A, wherein each 8-bit cue signal d1 to d8 is converted to a corresponding 14-bit cue signal C1 to C14. This data frame, including the synchronizing pattern, multiplexed cue signal and data (for example, audio PCM signal) is used to produce an audio PCM disc. The illustrated frame shown in Figure 1A may be recorded in a track on such an audio PCM disc.

As mentioned in the introductory portion of this specification, one technique for producing an audio PCM disc is to utilize in the disc-production process a master tape on which all the necessary audio PCM (and cue data) information is recorded. For example, the master tape containing the audio PCM signals and cue data may be used to etch or "cut" a mother or stamper disc from which replica audio PCM discs are stamped.

Referring again to Figure 1B, it will be appreciated that, for example, the Q-channel data signal is formed of ninety-eight bits, the first two bits, that is bits 0 and 1, being included in the sync patterns S0 and S1, respectively, and the remaining ninety-six bits representing cue data. As will be described below, the Q-channel cue data is representative of relatively sophisticated cue information, such as the identity (for example, address number) of a music programme, the beginning and end portions of that programme, and various intermediate portions, such as sub-addresses which may be used to represent, inter alia, a particular movement of a music programme. In addition, the Q-channel cue data may include timing information representing the duration as well as relative times of occurrence of the different portions of the audio programme.

The P-channel cue data may be relatively simpler than the aforementioned Q-channel cue data. For example, the P-channel cue signal may be a flag to indicate the beginning and end of an audio programme, as well as a pause in that programme. In a specific embodiment, the P-channel cue signal may be a two-level signal having a relatively lower level throughout the duration of an audio programme and a relatively higher level through the duration of a pause within or between such programmes. In addition, the P-channel cue signal may appear as an alternating signal having a frequency of about 2 Hz to define the lead-out section of the record disc. It will be appreciated that detection of this 2 Hz signal is indicative of the lead-out section of the disc, so as to suitably control the record disc playback device.

Thus, when the P-channel and/or Q-channel cue data is recorded on the record disc, desired programmes may be quickly and selectively accessed for playback by detecting and processing the cue data, and desired portions of such programmes may be selected directly. Thus, respective ones of the recorded programmes may be selected at random, and the playback device with which the record disc is used may be operated in conjunction with the recorded cue data so as to shift quickly from one programme to another and, moreover, from one portion of a programme to yet another portion of a still further programme. Hence, user selection of prerecorded materials is greatly enhanced and is quite flexible.

In the format illustrated in Figure 1B, it is seen that each frame includes one bit sample of each of the P-channel, Q-channel, ... W-channel cue signals. With reference to the P-channel cue signal, as mentioned above, this signal is at a relatively high level throughout a pause interval, for example, and is at a relatively low level throughout an audio programme interval. Hence, for each bit sample in the P-channel cue signal, there will be either a binary "0" or a binary "1" present depending upon whether the audio programme, at the time of that bit sample, is present or whether a pause interval is present. The bit samples of the Q-channel cue signal are described below with respect to Figures 2A to 2C.

Figure 2A represents the ninety-eight successive bits which comprise a Q-channel cue signal. As illustrated, the first two bits (which appear in data frames 0 and 1 in Figure 1B) are included in sync patterns S0 and S1. The next four bits of this Q-channel cue signal (that is the bits contained in data frames 2 to 5) indicate whether the audio PCM signals represent 2-channel or 4-channel signals and, moreover, whether the original audio information has been subjected to pre-emphasis. The next four bits of the Q-channel cue signal (which appear in data frames 6 to 9) indicate the mode of the Q-channel. The Q-channel cue data may be as shown in Figure 2B (mode 1) or as shown in Figure 2C (mode 2). In mode 1, the cue data indicates the number (MNR) of the audio programmes, an index (X) number representing, for example, the number of a movement, or equivalent, if the audio programme is a music piece, and timing information (in terms of minutes, seconds and tenths of seconds) which represents substantially real time in the duration of the audio programme. Figure 2B also illustrates "spare" bits, represented by the cross-hatched area, in the event that further information is to be represented by the cue data. The seventy-two information bits included in this cue data are disposed in data frames 10 to 81, respectively (Figure 1B).

The audio programme number (MNR), sometimes referred to herein as the "music number" to indicate the number of the musical selection that is recorded on the record disc, preferably is a 2-digit number formed of two 4-bit BCD characters, and may be any decimal number from 00 to 99. Preferably, although not necessarily, the music number MNR is set at 00 throughout all of the data frames in the lead-in track so as to identify that lead-in track on the disc. Also, the hexadecimal number AA is used as the music number (MNR) in all of the data frames in the lead-out track so as to identify that lead-out track. Index number (X) is also a 2-digit decimal number represented by two 4-bit characters. Preferably, a pause in or between audio programmes is represented by the index number (X) 00, and the actual movement or intermediate portion of an audio programme may be represented by any index number (X) from 01 to 99. The timing information is represented as a 5-digit number formed of a 2-digit minutes representation (tens and units), a 2-digit seconds representation (tens and units) and a 1-digit tenths of seconds representation. As a musical piece, for example, continues, the length of time of that piece is represented by updated timing information from zero until that musical piece ends. Hence, the timing information represents the length of time, up to that point, of the musical piece. The timing information also may represent the length of time of a pause between musical pieces, and in this representation, the timing information is decreased from a value representing the total length of time of the pause down to zero at the end of the pause and, thus, at the beginning of the next musical piece. Thus, during a pause interval, the timing information represents the amount of time remaining until the completion of that pause interval.

In mode 2 of the Q-channel cue data, as shown in Figure 2C, the cue data comprises thirteen decimal digits, each formed of a 4-bit character, N1 to N13. These digits may be used as a catalogue or identifying number of the disc, similar to conventional bar-coding. Since the amount of data represented by the Q-channel cue signal in mode 2 is far less than that represented in mode 1, both modes can be recorded on the same disc, with mode 2, for example, being provided in or next adjacent the lead-in or lead-out track.

Returning to Figure 2A, following the seventy-two bits of the Q-channel cue data is a 16-bit cyclic redundancy check (CRC) code signal. This CRC code signal is conventional and is utilized to detect and correct errors that may be present in the 80-bit Q-channel data. The CRC code signal bits are disposed in data frames 82 to 97 (Figure 1B) of the Q-channel.

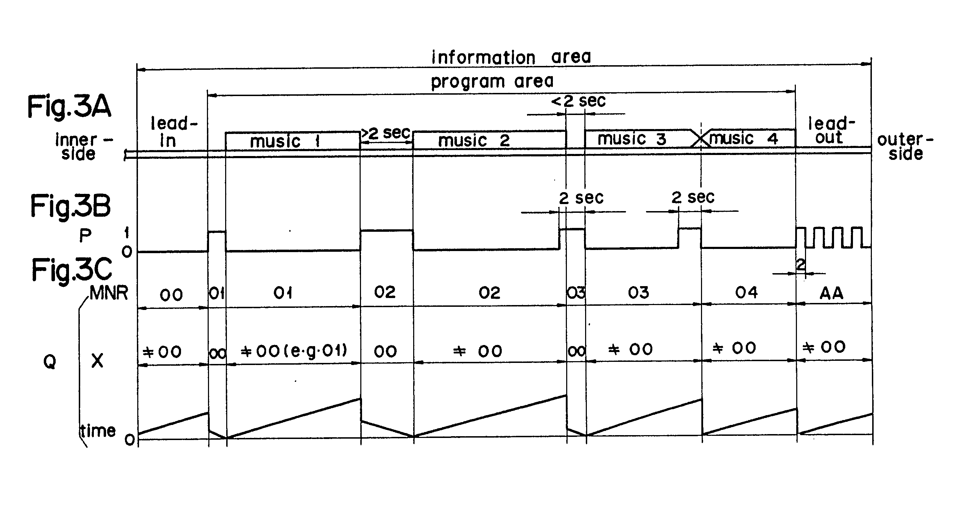

The relationship between the P-channel and Q-channel cue data and the actual audio programmes which are recorded on the audio PCM disc are illustrated schematically in Figures 3A to 3C. Figure 3A represents successive tracks commencing with the lead-in track having, for example, the smallest radius, and terminating with the lead-out track having the greatest radius. Between the lead-in and lead-out tracks are four separate music programmes, with pauses provided between the lead-in track and music programme 1, between the music programmes 1 and 2, and between the music programmes 2 and 3. Figure 3A further represents a cross-fade changeover from the music programme 3 to the music programme 4. The lead-out track follows immediately after the completion of the music programme 4.

It is appreciated that the music programme information is represented in Figures 1A and 1B by the "DATA" area, and the P-channel, Q-channel, . . . W-channel cue data is multiplexed and recorded with this audio data, as best illustrated in Figure 1B.

Figure 3B represents the P-channel cue signal, wherein a pause interval is represented by a binary "1" and an audio programme, or music interval, is represented by a binary "0". The actual duration of a binary "1" P-channel cue signal will be equal to the pause interval between audio programmes provided that such a pause interval is equal to or greater than two seconds. If the actual pause interval is less than two seconds, such as indicated between the programmes 2 and 3, the duration of the binary "1" P-channel cue signal will, nevertheless be fixed at two seconds. Moreover, in the event of a cross-fade between two music programmes, such as between the music programmes 3 and 4, the P-channel cue signal will, nevertheless, exhibit its binary "1" level for the fixed period of two seconds, as illustrated. As also illustrated in Figure 3B, the P-channel cue signal appears as an alternating signal throughout the lead-out interval.

The actual signals which are recorded in the P-channel for each data frame shown in Figure 1B will be a binary "0" or a "1", depending upon the level of the P-channel cue signal illustrated in Figure 3B at the time of occurrence of each respective data frame.

Figure 3C represents, on separate axes, the music number (MNR), the index number (X) and timing data included in the mode 1 Q-channel cue signal. As mentioned above, and as illustrated in Figure 3C, the music number (MNR) is set at 00 to identify the lead-in track, and is set at AA to identify the lead-out track of the audio PCM disc. This music number (MNR) is changed over to the numerical value 01 upon the occurrence of the first pause interval to represent the first music programme, and this music number (MNR) remains set at 01 throughout the duration of this first music programme. At the completion of th first music programme, the music number (MNR) is changed over to 02 to identify the second music programme. As illustrated, the music number (MNR) is changed over at the pause interval separating the music programmes 1 and 2, and remains set at 02 throughout the second music interval. Consistent with the foregoing, the music number (MNR) is changed over to 03 to identify the third music programme, and at the completion thereof, the music number (MNR) is changed over to 04 to represent the fourth music programme. It will be appreciated that, if additional music programmes are recorded on this disc, the music number (MNR) will continue to be incremented so as properly to identify the number of the additional music programmes. Hence, the music number (MNR) serves as an address for each music programme.

Figure 3C also illustrates the index number (X) which, as mentioned above, is set at 00 to identify each pause interval. The index number (X) is other than 00 (that is, it is not 00) during the lead-in and lead-out portions of the disc, and also during the respective music programmes. As an example, if the index number (X) represents a respective movement of each music programme, such movements are identified by the 2-digit index number. Of course, the index number (X) can be used to represent other intermediate or sub-portions of each audio programme.

Finally, Figure 3C represents the change in time from time zero throughout each audio programme, and also change in time down to time zero during each pause interval. Thus, during a music interval, or audio programme, the timing information included in the Q-channel cue data (Figure 2B) represents the passage of time from the beginning of that programme. In each pause interval, the time information commences at a value which represents the length of time of the pause interval, and gradually decreases to zero value at the completion of the pause interval.

The music number (MNR), the index number (X) and time information, all shown in Figure 3C, are represented as the 96-bit data shown in Figures 2A and 2B, this data being repeated, or updated, every ninety-eight data frames, as shown in Figure 1B. That is, at every ninety-eight date frames, the time information is updated and, if there has been a change, the music number (MNR) and/or the index number (X) also is updated. If there has been no change in the music number (MNR) it remains constant. Likewise, if there is no change in the index number (X) it too remains constant. Nevertheless, the time information is updated every ninety-eight data frames. It is recognized that, of course, time changes over the ninety-eight data frames. However, it is expected that the overall system timing is such that, for example, 980 (or even 1000) data frames occur each second and, therefore, the tenths of seconds digit in Figure 2B will normally be updated only once every ninety-eight data frames without loss of accurate timing data.

Figures 1 to 3 represent the cue data that is recorded on a record disc, such as an audio PCM disc. As mentioned above, the information recorded on such discs is generally derived from a master tape. This tape is used to "cut" a mother disc from which a stamper disc is made, the stamper disc then being used to stamp replica discs ultimately for use by customers. The cue data shown in Figures 1 to 3 is not recorded on the master tape in the same format that is used to record the cue data on the audio PCM disc. Rather, the cue data which is recorded on the master tape is merely a "list" of events, or occurrences of predetermined characteristics in the audio programmes (for example, beginning, end and intermediate portions such as musical movements, or the like) together with times of occurrences of such characteristics. This cue data which is recorded on the master tape thus may be viewed simply as a "table of contents", and to distinguish the cue data which is recorded on the audio PCM disc from the cue data which is recorded on the master tape, the latter cue data is referred to simply as TOC (Table of Contents) data.

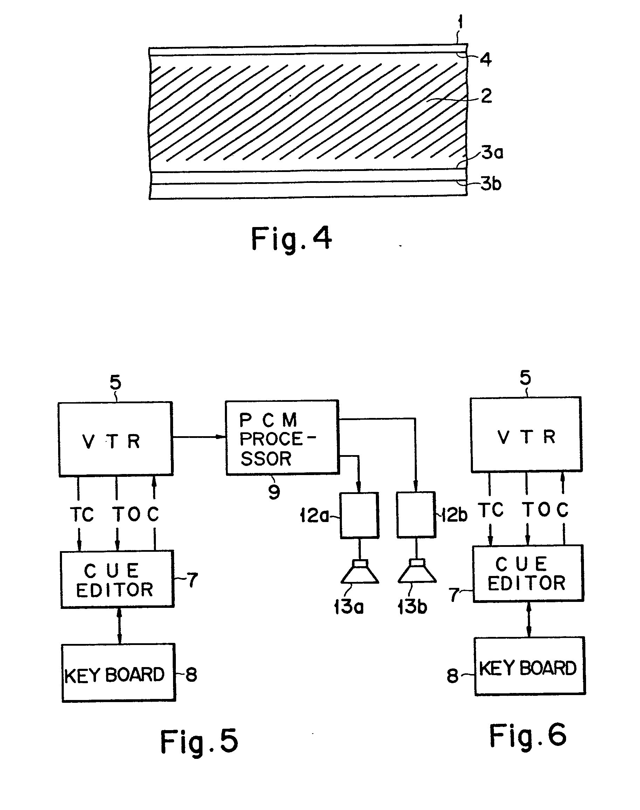

Figure 4 is a schematic illustration of the signal tracks recorded on a magnetic tape 1, which may be used as the master tape from which the audio PCM discs may be produced. The tape 1 is the type conventionally used to record video signals and is referred to herein as a video tape. Audio information, such as digital audio signals (or audio PCM signals) are recorded in skewed tracks 2 by the recording transducers of a helical scan recorder of the type similar to those used for recording video signals. Longitudinal tracks 3a and 3b, on which a VTR normally records audio signals, have time code (TC) signals and TOC signals recorded therein, respectively. The time code signals TC may advantageously be of the conventional SMPTE time code representing hours, minutes, seconds and frames, and typically are incremented as the recording proceeds. Such time code signals thus represent respective addresses of the tape 1 and indicate a relative location along the length of the tape 1 so that they may be used to address, or access, a particular one of the tracks 2 to recover the information recorded in the accessed track 2. Since the use of time code signals on video tapes is known, further description thereof is not provided in the interest of brevity.

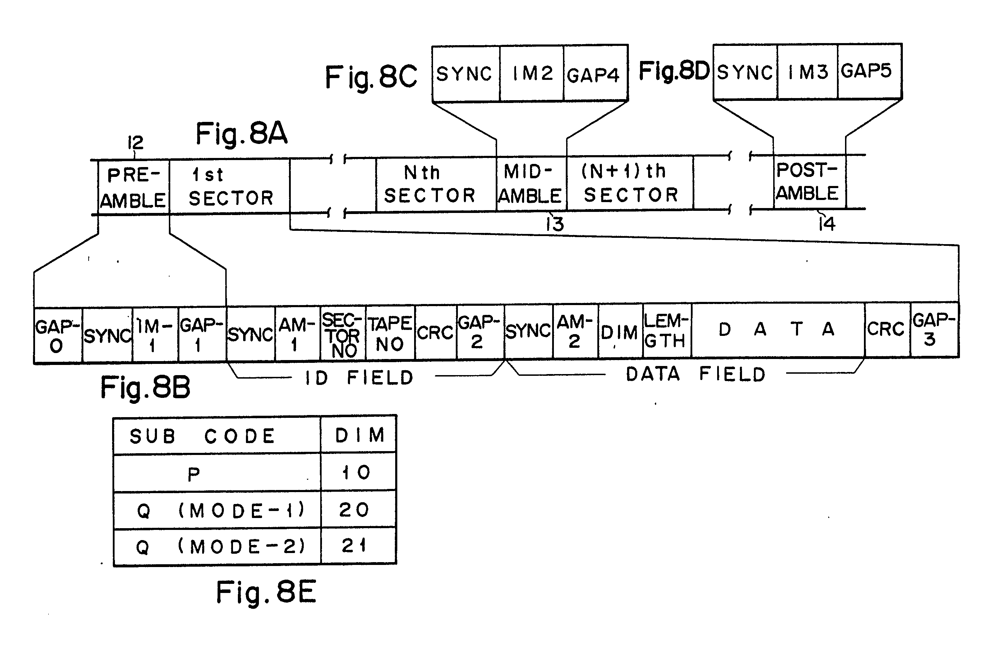

The TOC data recorded in the track 3b is of a format described hereinbelow with respect to Figure 8. Suffice it to say that this TOC data is provided with, for example, an audio programme number (MNR) for identifying an audio programme (for example, programme 1, programme 2, etc) and the relative location of that audio programme, as may be represented by a time code signal, an index number (X) for identifying, for example, the movement in a musical piece and the relative location of that movement, an indication of a change-over in the P channel cue signal from "1" to "0" and vice versa, and the times of occurrences (or relative locations) of such change-overs. The manner in which this TOC data is generated will be described further below. In a preferred example, this TOC data is recorded sequentially in the track 3b, and not necessarily in alignment or even in association with the programme information recorded in the tracks 2. For example, first all of the P-channel TOC data may be recorded successively and in sequence in the track 3b, followed by all of the Q-channel TOC data (preferably of mode 1). Normally, it is expected that all of the TOC data will be recorded in substantially less than the full length of the track 3b and, moreover, will occupy less length of the tape 1 than is occupied by the audio information recorded in the tracks 2.

The manner in which the TOC data is generated and recorded on the tape will be described with reference to three separate techniques:

(1) a so-called real time mode, (Fig. 5) wherein the TOC data is generated under the control of an operator while the operator is listening to the audio information played back from tape 1.

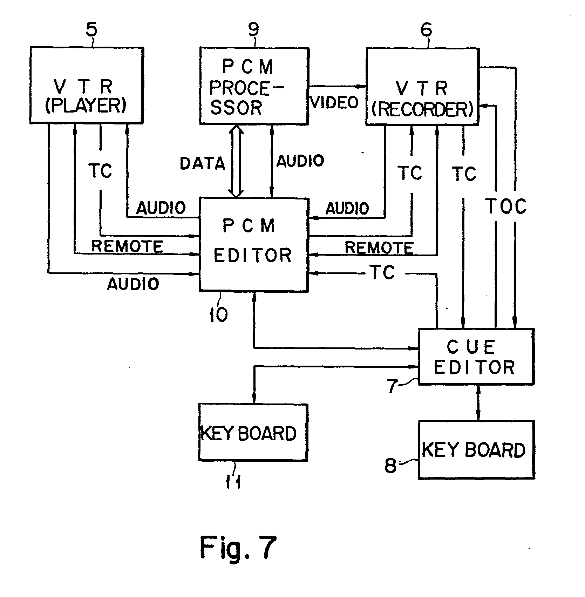

(2) a so called edit mode (Fig. 6) which is a key-entry tecnique whereby substantially all of the TOC data is generated in response to operator control of a keyboard; and

(3) a so called editor transfer mode (Fig. 7) which is a technique whereby the TOC data is generated in conjunction with an editing operation. Broadly all of the foregoing modes result in the generation of a cue signal upon the occurrence of a predetermined characteristic in the audio information that is recorded on the tape 1. Such predetermined characteristics comprise, for example, the beginning of an audio programme, the end of that programme, a pause between programmes, and various intermediate portions included in a programme, such as a change from one movement of a musical piece to another. It is appreciated that other detectable features of the audio programme may be utilized as the predetermined characteristics upon which cue signals are generated.

Also in accordance with the broader aspects of the foregoing modes, when a cue signal is generated, a time code signal is generated to represent the relative location on the tape 1 at which are recorded the aforementioned predetermined characteristics. This time code signal serves to address, or identify, the particular tracks 2 which are associated with the generated cue signal. As will be described, such time code signals may be generated by playing back the time code signals TC from the track 3a of the tape 1 or, alternatively, such time code signals may be generated by the manual operation of a keyboard. The manner in which the TOC data is derived and recorded will be explained in conjunction with the following description of each of the aforementioned TOC recording modes.

Figure 5 is a block diagram of one apparatus for carrying out the real time mode (1) wherein TOC data is recorded in real time. In this apparatus, the tape 1 is processed by a VTR 5 which is arranged to reproduce the audio PCM signals recorded in the tracks 2 and, moreover, is arranged to record TOC data in the track 3b. As illustrated, the VTR 5 is coupled to a PCM processor 9 which functions to recover the original audio analog signals from the audio PCM signals recorded on the tape 1, and to separate such audio signals into separate channels, such as left-channel and right-channel stereo signals. it is appreciated that if the audio PCM signals are recorded as 4-channel signals, the PCM processor 9 will process these signals in four separate channels. In Figure 5, the PCM processor 9 is coupled to amplifiers 12a and 12b which, in turn, drive loudspeakers 13a and 13b, respectively, to reproduce the audio sounds which have been recorded as signals in the skewed tracks 2 on the tape 1. Thus, the VTR 5 may be operated so as to play back the audio signals recorded on the tape 1 and to permit the user to listen to such reproduced audio sounds.

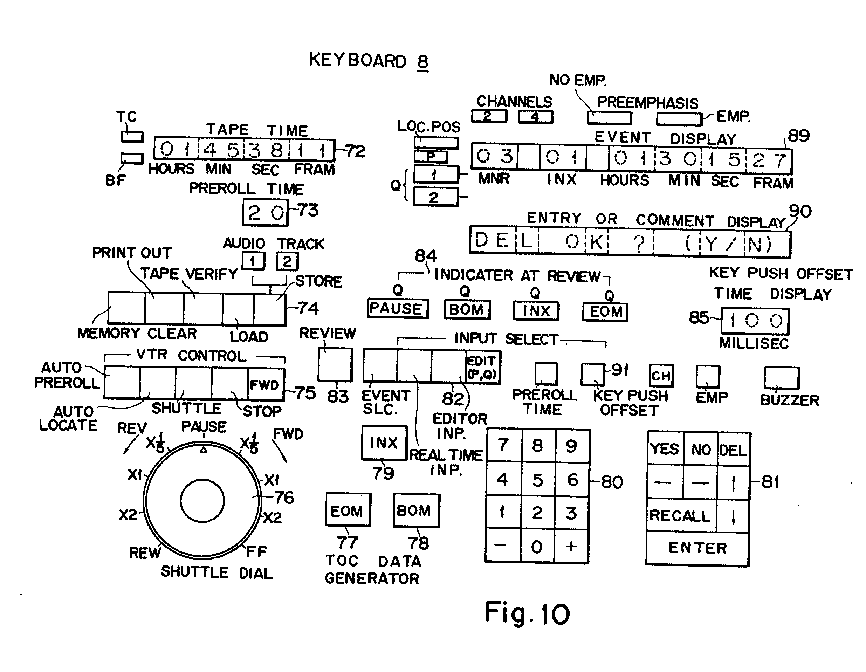

The VTR 5 is also coupled to a cue editor 7 which is described in greater detail hereinbelow with respect to Figures 10A and 10B. The cue editor 7 is coupled to a keyboard 8 which, under the control of an operator, serves to control the cue editor 7 to generate TOC data. The generated TOC data is supplied by the cue editor 7 to the VTR 5 for recording in the track 3b of the tape 1. As will be explained, the TOC data is generated in conjunction with time code signals (TC) which are reproduced from the tape 1 by the VTR 5 and supplied to the cue editor 7. As also illustrated in Figure 5, once the tape 1 is recorded with TOC data thereon, the information recorded on the tape 1 may be reproduced, and the reproduced TOC data is supplied to the cue editor 7 so as to check and verify that the generated TOC data is correct and accurate.

In operation, the tape 1 having audio PCM signals recorded in the tracks 2 is played back by the VTR 5. At this time, it is assumed that the TOC data has not been recorded on the track 3b. The reproduced audio PCM signals are supplied by the VTR 5 to the PCM processor 9 whereat they are processed (including error correction, digital-to-analog conversion, and the like) to recover the original audio signals which are used to drive the loudspeakers 13a and 13b. Hence, as the audio information is played back from the tape 1, the operator listens to the audio information to sense predetermined characteristics therein, such as the beginning and end of audi programmes, different movements of musical pieces and the like. Concurrently with the playing of the audio PCM signals, the time code signals TC recorded on the track 3a are also played back and supplied to the cue editor 7. When the operator senses a desired characteristic of the reproduced audio information, such as the beginning of an audio programme, a corresponding key on the keyboard 8 is actuated. The cue editor 7 is thus supplied with a signal representing the actuation of this key, and that signal is stored in a suitable memory together with the time code TC which had been reproduced at the time of the actuation of this key. Similarly, when the next desired characteristic of the reproduced audio information is sensed, such as a new movement of a musical piece, the end of an audio programme, a pause therein, or the like, a corresponding key on the keyboard 8 is actuated. Thus, the memory included in the cue editor 7 stores signals, sometimes referred to herein as cue signals, representing the actuation by the operator of respective keys of the keyboard 8, together with time code signals TC which identify the relative location along the tape 1 at which the characteristics represented by the cue signals are recorded.

After the tape 1 has been played back, or after the operator has reproduced a sufficient portion thereof, the VTR 5 is controlled, as by a suitable key on the keyboard 8, to rewind, or pre-roll, the tape 1 back to its beginning or other desired starting point. Then, the tape 1 is advanced and the cue signals stored in the memory of the cue editor 7 are recorded in the track 3b thereof.

As mentioned above, the TOC cue signals which are recorded in the track 3b include P-channel and Q-channel cue signals. These cue signals are recorded successively, for example, all of the P-channel cue signals are recorded, and then all of the Q-channel cue signals are recorded. Thus, the TOC signals recorded in the track 3b comprise the P-channel cue signals followed by the Q-channel cue signals. hence, the tape 1 is recorded with the PCM and TOC signals, together with the time code signals TC previously recorded thereon, and may be used as the master tape from which the audio PCM disc is derived.

Figure 6 is a block diagram of apparatus to carry out the edit mode (2) wherein the TOC data is generated in response to an operator-actuated keyboard. The apparatus shown in Figure 6 is substantially similar to that shown in Figure 5, except that the Figure 6 apparatus omits the PCM processor 9, the amplifiers 12a and 12b and the loudspeakers 13a and 13b.

In using the keyboard actuated apparatus of Figure 6, the operator notes the time codes reproduced from the tape 1 by the VTR 5 at the occurrence of each characteristic of the recorded programme information, such as the time code at the occurrence of the beginning of an audio programme, the end of that programme and changes within a musical peice from one movement to another. These notations may be made ahead of time and, for example, recorded on a suitable data sheet or form, such as by pencil and paper. Alternatively, these notations can be made by the operator when the magnetic tape having the audio programme information recorded thereon is played back, such as described above with respect to the apparatus of Figure 5. In any event, the keyboard 8 is operated by the operator so as to key into the memory of the cue editor 7 the TOC data representing each predetermined characteristic (for example, the beginning, end and intermediate portions of the respective audio programmes), together with the time codes representing the locations, or times of occurrence, of such predetermined characteristics. The TOC data is stored temporarily in the cue editor memory; and is read out therefrom when the VTR 5 is operated so as to record this TOC data on the track 3b of the tape 1. Thus, the apparatus of Figure 6 operates in an analogous manner to the operation of the apparatus of Figure 5 for recording successive TOC data in the track 3b, the recording of this data being independent on the actual locations on the tape 1 at which the characteristics identified by the TOC data are recorded. In both apparatus, and as mentioned above, first all of the P-channel TOC data is recorded and then all of the Q-channel TOC data is recorded. As will be explained below with reference to Figure 8, the TOC data is recorded in successive sectors, each sector containing cue information to identify particular characteristics in the audio programme and the relative locations on the tape 1 at which the characteristics are recorded. For example, each sector may contain TOC data relating to m characteristics. In the preferred apparatus, P-channel TOC data relating to a greater number of characteristics may be recorded in a sector than Q-channel TOC data.

Figure 7 is a block diagram of apparatus to carry out the editor transfer mode (3) wherein TOC data is recorded in conjunction with an editing operation. In the illustrated apparatus, information played back from one magnetic tape (for example, the "playback" tape) by the VTR 5 is transferred to another magnetic tape (for example, the "recording" tape) for recording thereon by a VTR 6. A PCM editor 10 is coupled to both VTRs 5 and 6 and is responsive to the actuation of an editing keyboard 11 selectively to control the operation of the VTRs 5 and 6 so as selectively to transfer desired information from one magnetic tape to the other. Since the transferred, or edited, information is assumed herein to be audio PCM information, the editor 10 is referred to as a PCM editor.

The structure and operation of the PCM editor 10 may be conventional. Moreover, since the magnetic tape playback recording devices with which the PCM editor 10 is used may be VTRs, it will be appreciated that the PCM editor 10 may be similar to conventional video editors. Suffice it to say that, under the control of the keyboard 11, the PCM editor 10 controls the VTR 5 to access a desired audio programme (as by searching for the time code which serves as the address for that programme), play back that desired programme, and transfer the programme, via the PCM processor 9, to the recording magnetic tape operated on by the VTR 6. The PCM editor 10 also operates to control the VTR 6 to access a desired portion of the recording tape on which the transferred programme is to be recorded. This too is achieved by using the time code recorded on the recording tape to address the desired location. Hence, selected, or isolated, audio programmes may be transferred from the playback tape to the recording tape.

Moreover, the PCM editor 10 is arranged to control the VTRs 5 and 6 so as to carry out both "insert" and "assemble" editing operations. Accordingly, a selected programme reproduced by the VTR 5 may be "inserted" between two existing programmes already present on the recording tape processed by the VTR 6. Also, successive audio programmes reproduced by the VTR 5 may be "assembled", one after the other, on the recording tape by the VTR 6.

It will be appreciated that the PCM editor 10 functions to select editing points on both the playback tape processed by the VTR 5 and the recording tape processed by the VTR 6. These editing points identify the respective locations along the playback and recording tapes at which editing operations are to be carried out. Typically, such editing points are identified by the respective time codes recorded on the playback and recording tapes. Furthermore, and as is known, the editing points are referred to as "cut-in" and "cut-out" points which designate the starting and stopping locations, or time codes, on the playback and recording tapes. It will be understood that the cut-in point typically identifies the beginning portion of an audio programme and the cut-out point typically identifies the end portion of that programme.

When an editing operation is carried out under operator-control of the keyboard 11, the various cut-in and cut-out points selected by the operator may be displayed by suitable display devices provided on the cue editor keyboard 8. Furthermore, as selected audio programmes are transferred to the VTR 6 and recorded on the recording tape thereby, a recording tape time code is generated by the PCM editor 10 for recording on this recording tape. This recording tape time code also may be displayed on the keyboard 8.

The keyboard 8 may be operator controlled so as to effect operation of the cue editor 7 and the VTR 6 in a manner similar to that described hereinabove with respect to Figures 5 and 6. Thus, under the control of the keyboard 8, the VTR 6 may be rewound, or pre-rolled, to play back desired ones of the edited programmes recorded on the recording tape. Actuation of suitable keys, or switches on the keyboard 8 serves to identify predetermined characteristics of the played back programme, and the locations of such characteristics are identified by the time code read from this tape. For example, suitable keys may be actuated upon detecting the beginning and end of a programme, as well as changes in the movement of the musical piece. The relative locations of such beginning and end portions, as well as the locations in the change in movements, are identified by the played back time codes. In addition, the keyboards 8 and 11 both may be operated during an editing operation so as to transfer desired programmes from the playback tape to the recording tape and, moreover, the beginning and end portions of such programmes (that is, the cut-in and cut-out points) also may be identified, together with their relative locations on the recording tape. As mentioned above, the cue signals which identify such portions, or characteristics, together with the time codes which identify the relative locations thereof, are stored in the memory of the cue editor 7 for recording as TOC data on the recording tape by the VTR 6. After an edit operation has been completed, and after the operator has identified those characteristics of the transferred audio programme with which he is interested, the cue editor 7 is controlled by the keyboard 8 to operate the VTR 6 so as to rewind the magnetic tape processed thereby and then record in, for example, the track 3b, the TOC data stored in the cue editor memory. As in the apparatus described above, the TOC data is recorded successively, for example, in successive sectors, at locations in the track 3b which are independent of the actual locations of the characteristics in the tracks 2 at which such characteristics are recorded.

In all of the apparatus shown in Figures 5 to 7, the magnetic tape having TOC data recorded thereon may be played back in order to check and verify that the recorded TOC data corresponds to the TOC data which had been selected by the operator. As one example, the TOC data stored in the memory of the cue editor 7 may be compared to the TOC data reproduced from the tape 1, and an indication of this comparison may be provided. As another example, the reproduced TOC data may be displayed and compared, or verified, by the operator as being the TOC data which he had selected. It will be appreciated that various other arrangements may be provided to verify that the TOC data recorded on the tape 1 is the same, or substantially the same, as the TOC data which had been selected by the operator.

Referring now to Figures 8A to 8E, there is schematically illustrated therein a representation of the format in which the TOC data is recorded in, for example, the track 3b of the tape 1. Preferably, this TOC data is recorded as a frequency modulated (FM) signal. As mentioned above, TOC data is generated by the operation of respective keys provided on the keyboard 8 in conjunction with time code data that is read from the tape 1. Let it be assumed that a basic element of the TOC data is a multi-byte sub-block, or word, which, for the P-channel cue signal, includes a flag signal representing, for example, the beginning of an audio programme and the end of an audio programme, and also includes time code data representing the relative location (or time of occurrence) along the magnetic tape at which the audio programme begins or ends. This P-channel TOC data is, of course, stored in the memory of the cue editor 7 as it is generated. Also stored in the memory of the cue editor 7 is the Q-channel TOC data whose sub-block includes a mode flag (for example, mode-1 or mode-2), control data representing the number of channels (for example, 2-channels or 4-channels) of the audio signals and whether those signals had been emphasized, a programme number (MNR), an index number (X) and time code data representing the relative location (or time of occurrence) of the beginning, end or intermediate portion of an audio programme on the magnetic tape.

Normally, the number of P-channel and Q-channel sub-blocks which are generated in response to the operator-actuated keyboard is well within the capacity of the cue editor memory. Preferably, a number of such sub-blocks are recorded in each of the respective sectors illustrated in Figure 8A. However, it is possible that the total number of P-channel and Q-channel sub-blocks exceeds the cue editor memory capacity. In that event, the excess number of sub-blocks will be recorded in one or more additional sectors. Figure 8A represents a preferred format by which such excessive sub-block generation may, nevertheless, be accommodated and recorded by the cue editor 7. This format includes a preamble 12 to identify the beginning of TOC data, followed by N separate sectors, each sector being arranged to contain a number of sub-blocks therein (to be described in greater detail below), followed by a mid-amble 13 which is provided to indicate that a number of P-channel and Q-channel sub-blocks exceeds the capacity of the cue editor memory, followed by additional sectors in which such excessive sub-blocks are recorded, and terminated by a post-amble 14 to indicate the end of the TOC data. Preferably, the P-channel sub-blocks are recorded first, such as in sector 1, sector 2, and so on, followed by the recording of the Q-channel sub-blocks in, for example, sector 3, sector 4, . . . . sector N.

It is recognized that the number of P-channel and Q-channel sub-blocks which are generated for each tape is a function of the number of audio programmes recorded on that tape, the different movements in each musical piece, and other characteristics of the recorded information as may be detected by the operator. Hence, the amount of TOC data may vary from tape to tape and, in some instances, the total amount of TOC data may be recorded in less than N sectors, while in other cases the total number of TOC data may be recorded in more than N sectors. The mid-amble 13 is omitted if the total amount of TOC data is recorded in N sectors or less, that is, if the total amount of TOC data does not exceed the memory capacity of the cue editor memory. Nevertheless, whether the mid-amble 13 is included or not, the TOC data is braketed between the preamble 12 and the post-amble 14.

A best shown in Figure 8B, the preamble 12 comprises the following sub-sections, arranged in order:

GAP 0 A pulse signal of the TOC data clock rate is provided in the GAP 0, which is arranged to dispose in a stand-by condition the TOC data recovery circuits that are used in recording a record disc. Such recovery circuits include a phase-locked loop for recovering the frequency modulated TOC data and also a window pulse forming circuit that is used to separate the essential P-channel and Q-channel cue signals from the format illustrated in Figure 8A. These circuits are placed in their respective stand-by conditions in response to the signal which is recorded in the GAP 0 sub-section. As an example, if a byte comprises eight bits, then the GAP 0 exhibits a duration of five bytes.

SYNC This sub-section is provided with a synchronizing clock signal which is used by the phase-locked loop included in the FM demodulator of the TOC data recovery circuits in order to synchronize the phase-locked loop with the played back TOC data. The duration of the SYNC sub-section is four bytes.

IM 1 This sub-section provides the Index Mark to indicate the beginning of the TOC data. The duration of the IM 1 sub-section is one byte.

GAP 1 The purpose of this sub-section is to provide sufficient tolerance to accommodate rewritten TOC data in the event that the rewritten data occupies greater space than the original. This may occur in the event that, during rewriting, the tape speed is not precisely the same as during the original data writing operation. The duration of the GAP 1 subsection is 22 ± 2 bytes.

Figure 8B illustrates the format of each sector in which the P-channel and Q-channel cue signals are recorded. Each sector is divided into an ID field followed by a data field. The ID field serves to identify the sector number (that is, sector 1, sector 2, . . . sector N) and the tape number in the event that, for example, two or more master tapes are used in the production of record discs. The data field contains the actual P-channel or Q-channel sub-blocks. The ID field is formed of the following sub-sections, in order:

SYNC The purpose of this SYNC sub-section is the same as the SYNC sub-section described above with respect to the preamble 12.

AM 1 This Address Mark sub-section identifies the ID field and is of a duration equal to one byte.

SECTOR NO This sub-section identifies the particular sector number in which it is contained, and is formed of two bytes to identify a sector from 0 to, for example, 65,535.

TAPE NO This TAPE NO identifies the particular master tape (for example, master tape 1, 2, etc) on which the TOC data is recorded.

CRC This CRC code is conventional and is used for the purpose of error checking and correction of the information recorded in the ID field of the sector.

The ID field is separated from the data field by the GAP 2 sub-section. The GAP 2 sub-section is of an interval equivalent to 22 ± 2 bytes and serves to provide a tolerance in the event that the TOC data is rewritten. In this regard, the GAP 2 sub-section is similar to the aforementioned GAP 1 sub-section.

The data field included in each sector has recorded therein either P-channel or Q-channel cue signals. In particular, the data field is provided with the following sub-sections, in order:

SYNC The purpose of this SYNC sub-section is similar to that of the SYNC sub-section included in the ID field. Accordingly, the data field SYNC sub-section is provided with a signal by which the TOC data recovery circuits are phase-locked to the frequency modulated TOC data.

AM 2 This Address Mark sub-section is of a duration equal to one byte and indicates whether the P-channel or the Q-channel cue signals included in the data field are invalid and should be ignored, or whether these signals are valid and represent proper cue data. For example, if the TOC data recorded in the track 3b is revised, as during another cue edit operation, it is possible that TOC data which had been recorded previously might not be erased. Nevertheless, this previous TOC data should be identified as being invalid so as to be ignored during the production of a record disc. The address mark included in this AM 2 sub-section serves to provide such an identification.

DIM This Data Identification Mark identifies the TOC data recorded in this sector as being either P-channel cue data or Q-channel due data. If the latter, the Data Identification Mark also identifies the mode (for example, Q mode-1 or Q mode-2). The Data Identification Mark preferably comprises one byte which, in decimal form, may be equal to 10 to identify P-channel cue data, 20 to identify Q-channel (mode-1) cue data and 21 to identify Q-channel (mode-2) cue data.

Figure 8E illustrates a table which indicates the data identification mark representation of the respective cue data signals. Although not shown, it will be appreciated that the data identification mark also may represent the R-channel, S-channel, . . . W-channel cue signals by other decimal identifying representations.

LENGTH This sub-section, which comprises one byte, represents the length of each P-channel or Q-channel sub-block or word, in the next following data sub-section of the data field. For example, each P-channel sub-block, or word, comprises five bytes. Each Q-channel sub-block, or word (both mode-1 and mode-2) comprises eight bytes. The LENGTH sub-section of the data field indicates the number of bytes per sub-block, or word.

DATA The data sub-section comprises 128 bytes. Since each P-channel sub-block, or word, comprises five bytes, it is appreciated that twenty-five P-channel sub-blocks, or words, may be included in the DATA sub-section, with the remaining three bytes therein being unused. Conversely, since each Q-channel sub-block, or word, comprises eight bytes, it is appreciated that sixteen Q-channel sub-blocks, or words, may be included in the DATA sub-section. In a preferred arrangement, the DATA sub-section of a sector is provided with only P-channel sub-blocks, or words, or with only Q-channel sub-blocks, or words. preferably a DATA sub-section is not provided with a mixture of both P-channel and Q-channel sub-blocks, or words. Furthermore, although a maximum of twenty-five P-channel sub-blocks, or words, and a maximum of sixteen Q-channel sub-blocks, or words, may be provided in the data sub-section, it is possible that less than this maximum amount may actually be provided. It is appreciated, particularly with reference to the Q-channel sub-blocks, or words, that the total number of sub-blocks, or words, included in the data sub-section is a function of the number of audio programmes (MNR) and index numbers (X) which are generated by the operator. Thus, the actual number of sub-blocks, or words, included in the DATA sub-section is a function of the nueer of detected characteristics included in the audio programmes recorded on the magnetic tape.

CRC The CRC code comprises two bytes and is used to detect errors in the data field when the TOC data is reproduced or otherwise processed.

GAP 3 This gap comprises 23 ± 3 bytes and provides some tolerance in the event that the TOC data is rewritten. In this regard, the GAP 3 is used for a purpose similar to that described above for the GAP 2.

The remaining sectors likewise comprise ID and data fields similar to that just described for sector 1. The mid-amble 13 is provided immediately following the sector N. As illustrated in Figure 8C, the mid-amble 13 is formed of the following sub-sections, in order:

SYNC This SYNC sub-section is similar to the SYNC subsection included in the preamble 12, and described above.

IM 2 This index Mark sub-section indicates that further data-containing sectors follow the mid-amble 13. Of course, and as mentioned above, if all of the TOC data is accommodated in the N sectors following the preamble 12, then the mid-amble section 13 is not needed; and the sectors (N+1) and so on are omitted.

GAP 4 This gap comprises 27 ± 2 bytes and serves a purpose similar to that served by the preceding gaps.

If the mid-amble section 13 is provided, additional sectors follow, each sector being of the type shown in Figure 8B and containing 1D and data fields. These additional sectors will be provided only for so long as the P-channel and/or Q-channel sub-blocks, or words, are generated and recorded. Preferably, there is not a fixed number of sectors either between the preamble 12 and the mid-amble 13, or between the mid-amble 13 and the post-amble 14. Following the last recorded sector, the post-amble 14 is provided.

As illustrated in Figure 8D, the post-amble 14 includes the following sub-sections, in order:

SYNC This SYNC sub-section is similar to, and is arranged to perform the same function as, the SYNC sub-section included in the preamble 12 and the mid-amble 13.

IM 3 This Index Mark comprises one byte indicating the end of the TOC data.

GAP 5 This GAP exhibits a length equal to about twenty-seven bytes and confirms the end of the TOC data.

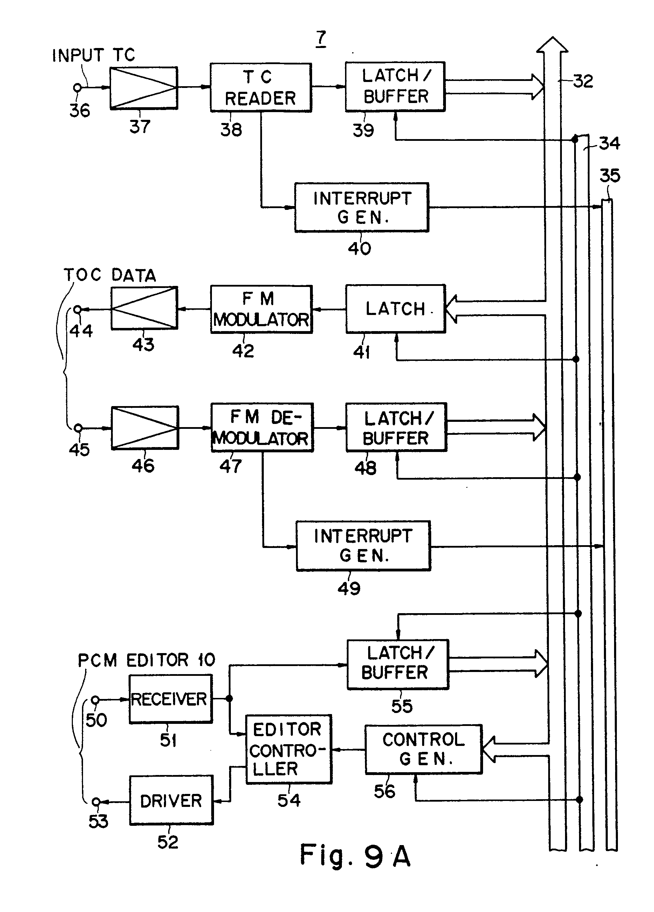

Figures 9A to 9B are a block diagram of one example of the cue editor 7. The cue editor 7 comprises a microcomputer including a central processing unit (CPU) 26, an address decoder 27, a random access memory (RAM) 28, a read only memory (ROM) 29 and an interrupt control circuit 31, all shown in Figure 10B. An address bus 33 interconnects the CPU 26 with each of the address decoder 27, the RAM 28 and the ROM 29. In addition, and as illustrated, a read/write control over the RAM 28 is effected by the CPU 26. A control signal generator 30 is supplied with a periodic signal by an oscillator to generate clock and timing control signals for use in the microcomputer.

The microcomputer is arranged to receive signals from the keyboard 8 and time code signals from the VTR, to generate TOC data therefrom and to supply this TOC data to the VTR for recording on the magnetic tape. In addition, the microcomputer is arranged to command the VTR to carry out record and playback operations, and when the cue editor 7 is used in conjunction with a PCM editor 10, as shown in Figure 7, the microcomputer is arranged to communicate with the PCM editor 10. To this effect, a data bus 32 is coupled to the CPU 26 and the RAM 28 in order to supply data to the microcomputer and to receive TOC data, as well as other function control data therefrom. An input/output (I/0) select bus 34 is coupled to the address decoder 27 and is arranged to permit data to be supplied to the data bus 32 from various ones of the external devices with which the cue editor 7 is used, and also to receive data from such devices. This data interchange is controlled by the CPU 26 in accordance with the program therefor stored in the ROM 29.

In addition, an interrupt bus 35 is coupled to the interrupt control circuit 31 to receive interrupt request signals from various ones of the external devices with which the cue editor 7 is used.

As illustrated in Figure 9A, time code signals which are reproduced from the magnetic tape are supplied to the data bus 32 and, thence, to the RAM 28. The time code signals are received from the VTR at an input terminal 36 from which they are amplified by an amplifier 37, read by a time code reader 38 and temporarily stored in a latch buffer 39. Upon reading a time code signal, the time code reader 38 also actuates an interrupt generator 40 which supplies an interrupt request via the interrupt bus 35 to the interrupt control circuit 31. When the microcomputer acknowledges this request, the address decoder 27 supplies, via I/0 select bus 34, an enable signal to the latch buffer 39, whereupon the time code signal stored in the latch buffer 39 is supplied to the data bus 32 for storage in the RAM 28.

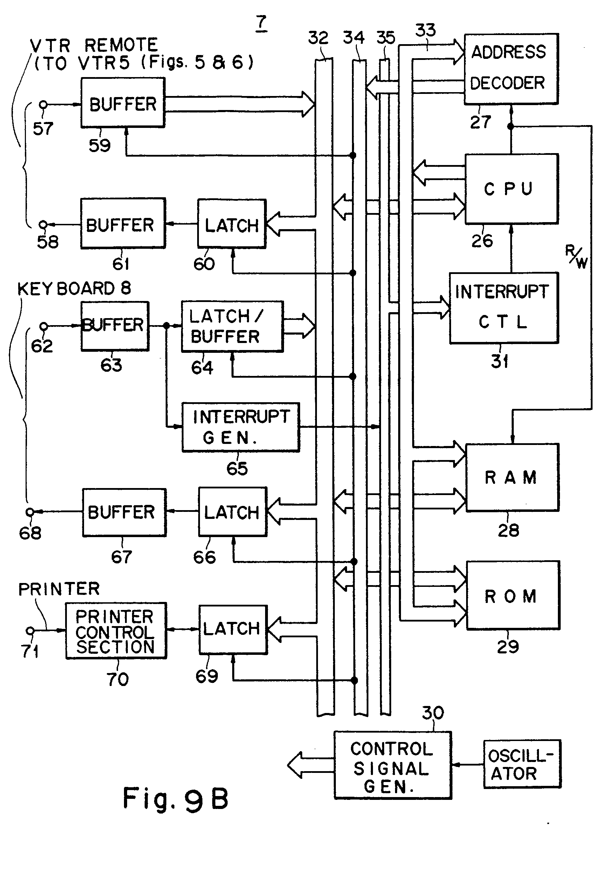

Referring to Figure 9B, the keyboard 8 is coupled to an input terminal 62 of the illustrated cue editor 7. When the keyboard 8 is actuated, a suitable signal representing the particular key which is operated is supplied to the input terminal 62 and thence to a latch buffer 64 via a buffer amplifier 63. The key signal supplied to the latch buffer 64 also serves to actuate an interrupt generator 65 which, in turn, provides an interrupt request to the interrupt control circuit 31 via the interrupt bus 35. When the microcomputer acknowledges this interrupt request, the address decoder 27 enables the latch buffer 64 via the I/0 select bus 34, to supply the key signal stored in the latch buffer 64 to the RAM 28.

As will be described below with respect to Figure 10, the keyboard 8 also includes various displays and indicators. When a cue edit operation is carried out, selected ones of these displays and indicators are energized. Display data is supplied from the CPU 26 to the RAM 28 and thence from the RAM 28 to a latch circuit 66 via the data bus 32. The latch circuit 66 is controlled by the address decoder 27 via the I/0 select bus 34, and, when enabled, supplies display data to an output terminal 68 via a buffer amplifier 67. Hence, the appropriate display or indicator device included in the keyboard 8 is actuated to indicate to the operator the operation then carried out.

Returning to Figure 9A, the keyboard supplied signals and time code signals supplied to the microcomputer from the keyboard 8 and from the VTR are used by the microcomputer to generate the TOC data described above and shown in the format illustrated in Figure 8. This TOC data is stored in the RAM 28 and supplied therefrom via the data bus 32 to a latch circuit 41 (Figure 9A). The latch circuit 41 operates under the control of the address decoder 27 via the I/0 select bus 34 to supply this TOC data to an FM modulator 42. Hence, the TOC data is frequency modulated and supplied to the VTR via a buffer amplifier 43 and output terminal 44. The frequency modulated TOC data is recorded in the track 3b of the tape 1.

As mentioned above, the TOC data may be reproduced from the tape 1 in order to compare and confirm that the TDC data which is recorded thereon is the same TOC data which had been selected by the operator. The reproduced TOC data is supplied to the microcomputer for comparison therein. As shown in Figure 9A, such reproduced TOC data is supplied to an input terminal 45 and supplied by an amplifier 46 to an FM demodulator 47. The demodulated TOC data is then temporarily stored in a latch buffer 48. When the TOC data is stored in the latch buffer 48, an interrupt generator 49 is actuated to supply an interrupt request to the interrupt control circuit 31 via the interrupt bus 35. When the microcomputer acknowledges this interrupt request, the latch buffer 48 is actuated to supply the reproduced TOC data to the RAM 28 via the data bus 32. The reproduced data stored in the RAM 28 is then compared by the CPU 26 with the desired TOC data which had been produced in response to the actuation of the keyboard 8 and time code signals read from the VTR, this desired TOC data also being stored in the RAM 28. An indication of the compared TOC data is provided by the keyboard 8 in response to display signals supplied thereto by the microcomputer.

When used with the PCM editor 10, the cue editor 7 shown in Figures 9A and 9B is coupled to the PCM editor 10 via an input terminal 50 and an output terminal 53. Signals, such as the editing point signals described above, are supplied from the PCM editor 10 to the input terminal 50, received by a receiver 51 and supplied therefrom both to an editor controller 54 and a latch buffer 55. The editing points are supplied via the data bus 32 to the RAM 28 when the latch buffer 48 is actuated by the address decoder 27 which supplies an actuating signal thereto via the I/O select bus 34. Also, the address decoder 27 actuates a control generator 56 to receive signals supplied thereto via the data bus 32 from the RAM 28 or from the CPU 26, these signals also being supplied to the editor controller 54. The editor controller 54 responds to the signals supplied thereto from the receiver 51 and also from the control generator 56 to supply suitable signals to the output terminal 53 via a driver 52. Although not described in detail herein, it should be appreciated that indications of editing points, as represented by time code signals, are supplied from the PCM editor 10 to the input terminal 50 and thence to the microcomputer of the cue editor 7, and the microcomputer supplies corresponding display signals representing such time code signals to the display and indicator devices of the keyboard 8. Also, representations of the actuation of certain ones of the keys of the keyboard 8, illustrated in Figure 10 are supplied to the microcomputer of the cue editor 7 which, in turn, applies corresponding VTR control signals to the PCM editor 10 via the driver 52 and the output terminal 53. Hence, the operation of the keyboard 8 results in selected operation of, for example, the recording VTR (each as the VTR 6 of Figure 7) via the PCM editor 10.

In Figure 9A, the editor controller 54 is arranged to generate synchronizing and clock signals for the PCM editor 10. Thus, signals which are supplied to the PCM editor 10 from the microcomputer, as in response to the selected operation of the keyboard 8, are properly synchronized with the PCM editor 10.

The cue editor 7 is coupled to, for example, the VTR 5 (Figures 5 and 6) via terminals 57 and 58 shown in Figure 9B. The terminal 58 supplies VTR control signals to advance the magnetic tape therein and receives from the VTR 5 signals representing the status or operating condition thereof. The signals received from the VTR 5 at the terminal 57 are supplied by a buffer 59 to the data bus 32 when the buffer 59 is actuated by the address decoder 27 via the I/O select bus 34. Control signals supplied to the VTR 5 from the terminal 58 are supplied from the microcomputer to the data bus 32 and thence to a latch circuit 60. The latch circuit 60 is actuated under the control of the address decoder 27 via the I/O select bus 34 to supply the control signals stored therein to the terminal 58 via a buffer amplifier 61. Thus, the cue editor 7 communicates with the VTR 5 to control the operation thereof.

The microcomputer is also coupled to a printer which is arranged to provide a printed record of TOC data verification. A printer control section 70 is coupled to a terminal 71, and the printer control section 70 bidirectionally communicates with a latch circuit 69. The latch circuit 69 is coupled to the data bus 32 to receive data from the microcomputer to control the printer control section 70. The latch circuit 69 is actuated under the control of the address decoder 27 via the I/O select bus 34.

Turning now to Figure 10, there is illustrated a schematic, plan representation of one example of the keyboard 8. The keyboard 8 is provided with various manually actuable keys, or switches, and also with indicators and display devices which are useful in carrying out cue edit operations. As illustrated, a time code display 72 is arranged to display the time code, in terms of hours, minutes, seconds and frames, which is reproduced by the VTR. The reproduced time code is supplied to the microcomputer shown in Figures 9A and 9B from the input terminal 36, and the microcomputer supplies the time code display 72, via the output terminal 68 (Figure 9B) the time code display signals. As the tape 1 is advanced, or rewound, a corresponding update in the displayed time code ensues.

In addition, a pre-roll time display 73 is provided to display the length of the tape 1 which is pre-rolled during particular cue editing operations.

The keyboard 8 is also provided with cue editing switches 74, two of which are illustrated as a LOAD switch and STORE switch. When the LOAD switch 74 is operated, TOC data is stored, or loaded into, the RAM 28. This TOC data may be produced as a function of the time code then reproduced from the tape 1, in combination with the actuation of a particular TOC data generator switch, to be described. When the STORE switch of the cue edit switches 74 is actuated, the TOC data stored in the RAM 28 is recorded onto the track 3b of the tape 1 for storage thereon.

VTR control switches 75, together with a shuttle dial 76, are provided in order to control the operation of the VTR 5 with which the cue editor 7 is used. For example, the VTR control switches 75 may include an AUTO LOCATE switch which, when actuated, serves to advance the tape 1 to a desired, or predetermined, time code address. The shuttle dial 76 is bidirectionally operable to advance or rewind the tape 1 at a slow, normal, fast or very fast speed, as desired.

TOC data generator switches include an END-OF-MUSIC (EOM) switch 77, a BEGINNING-OF-MUSIC (BOM) switch 78 and an INDEX (INX) switch 79. Normally, the operator will actuate a respective one of the switches 77 to 79 upon detecting a corresponding portion of the audio programme which is reproduced from the tape 1. For example, at the beginning of an audio programme, the BEGINNING-OF-MUSIC switch 78 is actuated. The actuation of the switch 78 results in the generation of TOC data which, when the LOAD cue editing switch 74 is actuated, loads the generated TOC data into the RAM 28. Likewise, when the end of an audio programme is sensed, the END-OF-MUSIC switch 77 is actuated, and this too results in the generation of corresponding TOC data. When a particular characteristic, such as a change in movement of a musical piece, or the like, is sensed, the operator will actuate the INDEX switch 79. This too results in the generation of TOC data, and will be described further hereinbelow.

A numerical key pad 80 is provided to enable the operator to enter manually a desired time code. The key pad 80 is normally used when TOC data is generated by the apparatus shown and described with reference to Figure 6.

Function control keys 81 are provided and are used for verifying TOC data, and for controlling a cue edit display.

Editing mode selector switches 82 are provided to select the particular mode in which the cue editor 7 is to operate. For example, when operating in accordance with the real time mode (1), as implemented by the apparatus of Figure 5, a REAL TIME INPUT switch is actuated. When operating in accordance with the edit mode (2), as implemented by the apparatus shown in Figure 6, an EDIT switch is operated. Finally, when operating in accordance with the editor transfer mode (3), as implemented by the apparatus shown in Figure 7, and as used with a PCM editor, an EDITOR INPUT switch is operated.

A REVIEW switch 83 is operable to reproduce the TOC data that is recorded on the tape 1 so as to compare and verify that the recorded TOC data corresponds to the TOC data which has been selected by the operator. During this review mode, when a particular Q-channel cue signal is reproduced, a respective one of indicators 84 is energized to appraise the operator of the particular characteristic which is represented by the recorded Q-channel cue signal. The indicators 84 are arranged to indicate "pause", "BOM" (beginning of an audio programme), "INX" (characteristics such as a change in movement) and "EOM" (end of audio programme) indications respectively.

An offset display 85 also is provided. The offset display 85 provides a display, such as in milliseconds, of the offset reaction time between the occurrence of a predetermined characteristic and the actuation by the operator of a respective TOC data generator switch. This offset, which may be preset and adjusted, as desired, by the operator, serves to cancel the expected delay between detection and operator action.

An event display 89 is arranged to display the TOC data which is generated by, for example, the actuation of TOC data generator switches 77 to 79. The event display 89 may display P-channel cue signals or Q-channel cue signals, the latter in either mode-1 or mode-2, depending upon the actuation of selector switches disposed to the side of the event display 89. As shown in Figure 10, the event display 89 here displays the audio programme number (MNR=03), the index number (X=01) and the time code at the time X=01, this time code indicating one hour, thirty minutes, fifteen seconds and twenty-seven frames.

A data entry or comment display 90 is provided to display various controls and functions of the cue editing operation, the comment display 90 cooperating with the function control keys 81.

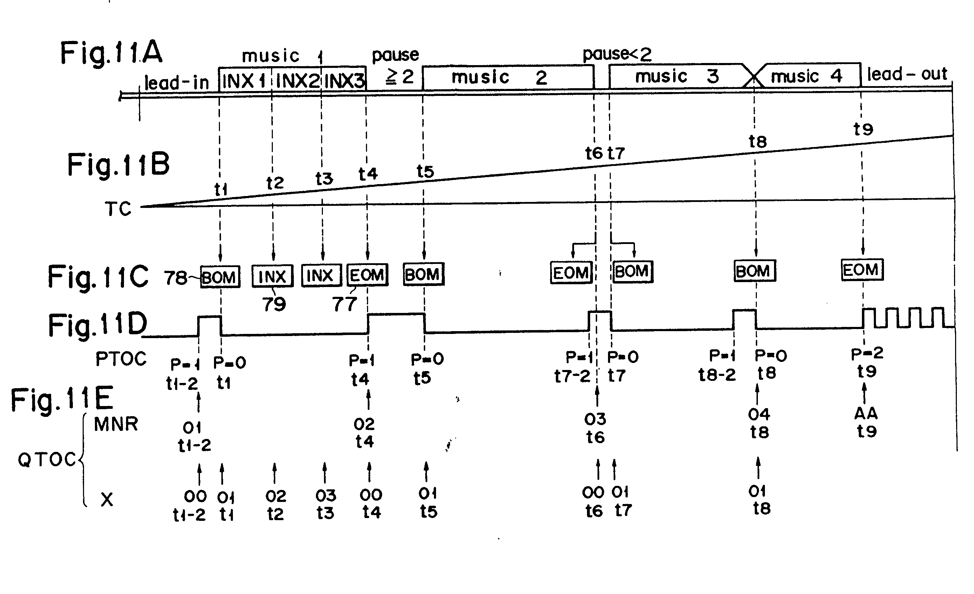

The manner in which the keyboard 8 illustrated in Figure 10 is operated in order to produce TOC data now will be described in conjunction with the timing diagrams shown in Figures 11A to 11E. Figure 11A is a schematic representation of the audio PCM signals which are reproduced from the tape 1. It is seen that these signals are similar to those shown in Figure 3A. Thus, following a lead-in portion on the tape 1, a first audio programme (music 1) is reproduced. As an example, it is assumed that this programme is a musical piece having three separate movements, these movements being identified as INX 1, INX 2 and INX 3, respectively. Then, after a pause which is greater than two seconds, the second audio programme (music 2) is reproduced. Thereafter, following a pause of less than two seconds, a third audio programme (music 3) is reproduced; and this third audio programme is cross-faded into a fourth audio programme (music 4). Finally, a lead-out portion is provided on the tape 1. Figure 11B represents an analog version of the time code which is reproduced from the tape 1 as the tape 1 is advanced from its lead-in portion, through the respective audio programmes to its lead-out portion.

Let it be assumed that the cue editing operation is to be carried out in accordance with the real time mode (1), and REAL TIME INPUT switch of the edit mode switches 82 is operated. This real time mode (1) is implemented by the apparatus shown in Figure 5, and it is recalled that, in accordance with this cue editing mode, the audio information is reproduced and, when predetermined characteristics therein are detected by the operator, appropriate ones of the TOC data generator switches are operated.

Following the lead-in portion, the operator detects the beginning of the audio programme (music 1) at time t1. Accordingly, the operator actuates the BOM switch 78. At that time, the RAM 28 stores a P-channel cue signal equal to "0" and also stores the time code corresponding to time t1. In addition, the identity of the BOM switch 78 is stored. Furthermore, since this is the first audio programme, the RAM 28 also stores the Q-channel cue signal MNR=01. In addition, since this is the first movement in this programme, the RAM 28 additionally stores the Q-channel cue signal X=01. In one example, although not stored in the RAM 28, when the TOC data is recorded on the tape 1, the time code at two seconds prior to time t1 (that is, t1-2) is recorded, together with the P-channel cue signal P="1" at time t1-2. Also, the cue editor will record on the tape 1 the Q-channel cue signals (MNR=01) at time t1-2 and (X=00) also at time t1-2, even although these Q-channel cue signals might not be stored in the RAM 28. Such Q-channel cue signals are generated automatically.

It is assumed that at time t2 the INDEX switch 79 is actuated when the operator detects a change in the movement of the musical piece. Hence, the Q-channel cue signal (x=02) at time t2 is stored in the RAM 28. Likewise, at time t3, the INDEX switch 79 is actuated once again upon detection of a change in the movement of the musical piece. Consequently, the Q-channel cue signal (X=03) at time t3 is stored in the RAM 28.

At time t4 the first audio programme ends. Hence, the operator actuates the EOM switch 77, resulting in the storage in the RAM 28 of the P-channel and Q-channel cue signals at time t4 of p=1, MNR=02 and X=00.

When the beginning of the next audio programme is detected at time t5, the operator actuates the BOM switch 78. Accordingly, the P-channel and Q-channel cue signals now generated are P=0 and X=01. These signals are stored in the RAM 28 together with the time code representation of t5. It is seen from Figure 11E that the audio programme number (MNR) changed at the end of the previous audio programme, and will not be updated until the completion of this second audio programme.

At time t6 the operator detects the end of the second audio programme and actuates the EOM switch 77. At that time, the following P-channel and Q-channel cue signals are generated: P=1, MNR=03 and X=00. Also, the time code representation of time t6 is generated. These signals are stored in the RAM 28.

At time t7, the operator detects the beginning of the third audio programme and actuates the BOM switch 78. Hence, the P-channel cue signal P=0 at time t7 is generated. However, since the difference between the time code signals t6 and t7 is less than two seconds, the previous P-channel cue signal of P=1 at time t6 is erased from the RAM 28 and is now replaced by P=1 at time t7-2. In addition, the actuation of the BOM switch 78 at time t7 results in the generation of the Q-channel cue signal X=01 at time t7.

At time t8 the operator detects the fade-out of the third audio programme and the concurrent fade-in of the fourth audio programme. At this time he actuates the BOM switch 78 once again. Accordingly, the microcomputer of the cue editor 7 generates the following P-channel and Q-channel cue signals P=0, MNR=04 and X=01. Also, the time code corresponding to time t8 is stored in the RAM 28. Further, the microcomputer senses at time t8 the immediately preceding P-channel cue signal stored in the RAM 28 also had been P=0.

Hence, the microcomputer additionally writes into the RAM 28 the further P-channel cue signal of P=1 at time t8-2.

Finally, upon detecting the end of the fourth audio programme, the operator actuates the EOM switch 77, and upon detection of the lead-out portion of the tape 1, the microcomputer generates the following P-channel and Q-channel signals: P=2 at time t9, and MNR=AA (hexadecimal) at this same time. This represents the lead-out portion of the tape 1.

After the RAM 28 stores the TOC data generated in the above described manner, the STORE cue editing switch 74 is actuated. This drives the VTR to rewind the tape 1 to the beginning, or initial point, and then the tape 1 advances and the TOC data stored in the RAM 28 is read out and recorded in the track 3b. During this recording mode, the TOC data is disposed in the format illustrated in Figure 8.

When the keyboard 8 of Figure 10 is operated in accordance with the edit mode (2), whereby the TOC data is generated merely by the actuation of the respective switches, a suitable one of the TOC data generator switches 77 to 79 is actuated and also the numeral switches of the key pad 80 are actuated, the latter serving to generate time code data. This mode may be selected by operating the EDIT switch of the edit mode switches 82.

When the editor transfer mode (3) is selected, as when the cue editor is operated in conjunction with a PCM editor, the EDITOR INPUT switch 82 is operated. Cut-in and cut-out edit points function as BOM and EOM points, resulting in an updating of the audio programme number (MNR) and also resulting in the generation of the index number X=00. These Q-channel cue signals are stored in the RAM 28 together with the time codes corresponding to these points, as read from the recording tape. Alternatively, once the cut-in and cut-out points have been elected, the audio programme defined by these points may be transferred from the payback tape to the recording tape, and the operator may operate the BOM switch 78 and te EOM switch 77 at the beginning and end of this edit operation. This is similar to the first-mentioned real time mode (1) wherein the cue data is generated in real time.

The foregoing has described the manner in which the Q-channel cue signals are produced by the operator in response to the manual operation of the function control switches 81 and the numerical key pad 80.

Various changes and modifications are of course possible. For example, instead of recording TOC data in the format shown in Figure 8, the track 3b may have recorded therein the cue signals shown in Figures 2A to 2C, as well as the P-channel cue signal shown in Figure 3B. Also, suitable electronic sensors may be provided to detect pauses, beginning and end portions of audio programmes, and other predetermined characteristics in the recorded information. Such automatic detection may be used in place of an operator, and such detection may result in the automatic generation of suitable P-channel and Q-channel cue signals. Such signals will be analogous to those which are generated in response to the actuation of the TOC data generator switches 77 to 79 of Figure 10. Still further, the RAM 28 may be formed as a nonvolatile memory, such as a bubble memory, to prevent the loss of cue data therein in the event of a power failure or other loss-of-memory event.

**Claims**

1. Apparatus for generating data identifying predetermined characteristics of information recorded in tracks (2) on a recording medium (1) and for recording said data other than in said tracks (2) in which said information is recorded, the apparatus comprising:
   reproduced signal input means (5) for receiving played back information from said recording medium (1);
   code signal means for deriving code signals which sequentially change in accordance with the position on said recording medium (1), and including code signal playback means (5) for playing back said code signals from said recording medium (1);
   cue signal generating means (7, 8) for generating respective cue signals upon the occurrence of respective ones of said predetermined characteristics in said played back information;
   memory means (7) for storing said code signals and said cue signals; and formatting means (7) for producing said data in a predetermined format in accordance with the stored said code signals and said cue signals;
   said cue signal generating means (7, 8) including keyboard means (8, Figure 10) including manual switch means (8) having a plurality of switches (77, 78, 79) selectively manually operable by an operator when said operator detects respective ones of said predetermined characteristics in said played back information to generate a respective cue signal, and keys (80) selectively manually operable by said operator to generate respective code signals;
   characterized by:
   said data indicating the relation between occurrences of predetermined characteristics of said information and time information;
   selecting means for selecting a real time mode or an edit mode, wherein in said real time mode, said respective cue signals are generated and stored in said memory means (7) together with said code signals from said code signal means, upon operation of said respective ones of said plurality of switches (77, 78, 79) simultaneously as said played back information is monitored, and wherein, in said edit mode, said respective cue signals are generated and stored in said memory means (7) upon operation of said respective ones of said plurality of switches (77, 78, 79) and keys (80) or operation of said keys (80).

2. Apparatus according to claim 1 wherein said code signal means includes means responsive to the manual operation of said respective ones of said plurality of switches (77, 78, 79) to detect said code signal played back at the time that said respective ones of said plurality of switches (77, 78, 79) is operated.

3. Apparatus according to claim 1 wherein said format means (7) includes encoding means including format selector switch means (82) operable by said operator to select a desired cue data format and for encoding said cue data in a selected one of at least two cue data formats from said cue signals and said code signals.

4. Apparatus according to claim 3 wherein one of said cue data formats includes a flag signal indicative of the occurrence of a predetermined characteristic and a location signal derived from said code signal, another of said cue data formats includes data representing the occurrence and identity of a predetermined characteristic and said location signal derived from said code signal.

5. Apparatus according to claim 4 wherein said format means (7) further includes formatting identifying means for adding to the encoded cue data a format identifying signal for identifying the said cue data format that has been selected.

6. Apparatus according to any one of the preceding claims wherein the information recorded in said tracks (2) on said recording medium (1) includes the beginning, end and predetermined portions of said information; and wherein said plurality of switches (77, 78, 79) are manually operable to generate cue signals representing the beginning, end and predetermined portions, respectively.

7. Apparatus according to any one of the preceding claims wherein said information is audio information.

8. Apparatus according to claim 1 comprising:
   said reproduced signal input means (5) for receiving played back information and code signals representing relative locations on a first recording medium (1) at which said information is recorded from said first recording medium (1) in a playback means (5);
   signal output means for deriving selected portions of the information played back from said first recording medium (1) and code signals representing relative locations on a second recording medium at which said played back information is to be recorded on said second recording medium in a recording means (6);
   editing means (10, 54) for selecting edit points at which portions of said played back information from said first recording medium (1) are recorded on said second recording medium;
   memory means (28) for storing said cue signals and code signals representing selected relative locations on said second recording medium; and formatting means for producing cue data in a predetermined format in accordance with the stored cue signals and code signals;
   whereby the cue data recorded on said second recording medium represents the predetermined characteristics in the information recorded on said second recording medium.

9. Apparatus according to claim 8 wherein said recording means (6) is operative to record said cue data in successive sectors in different tracks (3a, 3b), said cue data in each sector representing the occurrence of a respective predetermined characteristic and the relative location on said second recording medium (1) at which said predetermined characteristic is recorded, and the successive sectors being recorded in the different tracks (3a, 3b) at locations which are independent of the actual locations of the respective predetermined characteristics.

10. Apparatus according to claim 8 wherein said keyboard means (8, Figure 10) includes a recording selecting means (82) for selecting an editor input mode, in said editor input mode, said respective cue signals are generated upon operation of said respective ones of said plurality of switches (77, 78, 79) and stored in said memory means (7) together with said code signals.

11. Apparatus according to claim 1 comprising:
playback means (5) for playing back said information from a magnetic tape (1) forming said recording medium (1);
code signal generating means (5, 7) for generating signals having a predetermined relationship with said played back information;
said formatting means (7) for producing said cue data in a track (3a, 3b) on said tape (1) different from the tracks (2) in which said information is recorded; format selector switch means (77, 78, 79) operable to encode said cue signal to produce a flag signal indicative of the occurrence of a predetermined characteristic, wherein said code signal represents the relative location on said tape (1) at which said predetermined characteristic is detected, and said recording means (5) is operative to record said flag signal and said code signal in a separate track (3a, 3b) on said tape (1) independent of the actual location on said tape (1) at which said predetermined characteristic was detected; and
said format selector switch means (77, 78, 79) also being operable to encode said cue signal to represent the occurrence and identity of a predetermined characteristic, wherein said code signal represents the relative location on said tape (1) at which said predetermined characteristic occurred, said format selector means is further operable to include, in said encoded cue signal, a location signal derived from said code signal, and said recording means (5) is operative to record in a separate track (3a, 3b) on said tape (1), successive encoded cue signals including location signals.

**Patentansprüche**

1. Gerät zum Erzeugen von Daten, die vorbestimmte Eigenschaften von in Spuren (2) auf einem Aufzeichnungsmedium (1)aufgezeichneten Informationen identifizieren, und zum Aufzeichnen dieser Daten in anderer Weise als in den Spuren (2), in denen die Informationen aufgezeichnet sind,

mit einer Eingangseinrichtung (5) für reproduzierte Signale zum Empfang der von dem Aufzeichnungsmedium (1) wiedergegebenen Information,

mit einer Kodesignal-Einrichtung zur Herleitung von Kodesignalen, die sich sequentiell entsprechend der Position auf dem Aufzeichnungsmedium ändern, wobei diese Kodesignal-Einrichtung eine Kodesignal-Wiedergabeeinrichtung (5) zur Wiedergabe der Kodesignale von dem Aufzeichnungsmedium (1) aufweist,

mit einer Markiersignal-Generatoreinrichtung (7, 8) zur Erzeugung von Markiersignalen jeweils beim Auftreten der genannten vorbestimmten Eigenschaften in der wiedergegebenen Information,

mit einer Speichereinrichtung (7) zur Speicherung der Kodesignale und der Markiersignale,

sowie mit einer Formatierungseinrichtung (7) zur Erzeugung der genannten Daten in einem vorbestimmten Format in Abhängigkeit von den gespeicherten Kodesignalen und den Markiersignalen,

wobei die Markiersignal-Generatoreinrichtung (7) eine Tastatur (8, Fig. 10) enthält, die manuelle Schaltmittel (8) mit einer Mehrzahl von Schaltern (77, 78 79) umfaßt, die zur Erzeugung entsprechender Markieraignale selektiv von einer Bedienungsperson manuell betätigbar sind, wenn diese entsprechende Exemplare der vorbestimmten Eigenschaften in der wiedergegebenen Information feststellt, sowie Tasten (80), die von der Bedienungsperson zur Erzeugung enstprechender Kodesignale selektiv manuell betätigbar sind,

dadurch gekennzeichnet,

daß die genannten Daten die Beziehung zwischen dem Auftreten vorbestimmter Eigenschaften der Information und der Zeitinformation anzeigen,

und daß Wählmittel vorgesehen sind zur Auswahl eines Echtzeit-Modus oder eines Schneid-Modus, wobei in dem Echtzeit-Modus die jeweiligen Markiersignale erzeugt und zusammen mit den Kodesignalen der Kodesignal-Einrichtung gespeichert werden, wenn die betreffenden Exemplare aus der Mehrzahl von Schaltern (77, 78 79) bei der Überwaschung der wiedergegebenen Information gleichzeitig betätigt werden, und wobei in dem Schneid-Modus die jeweiligen Markiersignale erzeugt und in der Speichereinrichtung (7) gespeichert werden, wenn die betreffenden Exemplare der Mehrzahl von Schaltern (77, 78, 79) und Tasten (80) betätigt werden oder diese Tasten (80) betätigt werden.

2. Gerät nach Anspruch 1, bei dem die Kodesignal-Einrichtung Mittel enthält, die suf die mauelle Betätigung der jeweiligen Exemplare aus der Mehrzahl von Schaltern (77, 78, 79) ansprechen, um das wiedergegebene Kodesignal in dem Zeitpunkt zu erfassen, in dem die betreffenden Exemplare aus der Mehrzahl von Schaltern (77, 78, 79) betätigt werden.

3. Gerät nach Anspruch 1, bei dem die Formatierungseinrichtung (7) eine Kodiereinrichtung enthält mit einer Formatwahl-Schalteinrichtung (82), die durch von der Bedienungsperson betätigbar ist, um ein gewünschtes Markierdatenformat auszuwählen und die Markierdaten aus den Markiersignalen und den Kodesignalen in ein aus wenigstens zwei Markierdatenformaten ausgewähltes Markierdstenformat zu kodieren.

4. Gerät nach Anspruch 3, bei dem eines der Markierdatenformate ein für das Auftreten einer vorbestimmten Eigenschaft kennzeichnendes Kennzeichensignal sowie ein aus dem Kodesignal abgeleitetes Ortssignal enthält, und bei dem ein anderes der Markierdatenformate Daten enthält, die das Auftreten und die Identität einer vorbestimmten Eigenschaft und das aus dem Kodesignal abgeleitete Ortssignal repräsentieren.

5. Gerät nach Anspruch 4, bei dem die Formatierungseinrichtung (7) ferner eine Formatierungs-Identifizierungseinrichtung aufweist, die ein Format-Identifizierungssignal zur Identifizierung des ausgewählten Markierdaten-Format zu den kodierten Markierdaten addiert.

6. Gerät nach einem der vorhergehenden Ansprüche, bei dem die in den Spuren (2) des Aufzeichnungsmediums (1) aufgezeichnete Information den Anfang, das Ende und vorbestimmte Abschnitte dieser Information enthalten, und bei dem die Mehrzahl von Schaltern (77, 78, 79) manuell derart betätigbar sind, daß sie Markiersignale erzeugen, die den Anfang, das Ende bzw. vorbestimmte Abschnitte angeben.

7. Gerät nach einem der vorhergehenden Ansprüche, bei dem die Information eine Ton-Information ist.

8. Gerät nach Anspruch 1, umfassend

die genannte Eingangseinrichtung (5) für reproduzierte Signale zum Empfang von von einem ersten Aufzeichnungsmedium (1) in einer Wiedergabe-Einrichtung (5) wiedergebener Information sowie von Kodesignalen, die die relativen Orte auf dem ersten Aufzeichnungsmedium (1) angeben, an denen diese Information aufgezeichnet ist,

eine Signal-Ausgabeeinrichtung zur Herleitung ausgewählter Teile der von dem ersten Aufzeichnungsmedium (1) wiedergegebenen Information und von Kodesignalen, die relative Orte auf einem zweiten Aufzeichnungsmedium angeben, an denen die wiedergegebene Information auf diesem zweiten Aufzeichnungsmedium in einer Aufzeichnungseinrichtung (6) aufgezeichnet werden soll,

eine Schneideinrichtung (10, 54) zur Auswahl von Schneidpunkten, an denen Teile der von dem ersten Aufzeichnungsmedium (1) wiedergegebenen Information auf dem zweiten Aufzeichnungsmedium aufgezeichnet werden,

eine Speichereinrichtung (28) zur Speicherung der genannten Markiersignalen und von Kodesignalen, die ausgewählte relative Orte suf dem zweiten Aufzeichnungsmedium angeben,

und eine Formatierungseinrichtung zur Erzeugung von Markierdaten in einem vorbestimmten Format in Abhängigkeit von den gespeicherten Markiersignalen und Kodesignalen,

so daß die auf dem zweiten Aufzeichnungsmedium aufgezeichneten Markierdaten die vorbestimmte Eigenschaft in er auf dem zweiten Aufzeichnungsmedium aufgezeichneten Information angeben.

9. Gerät nach Anspruch 8, bei dem die Aufzeichnungseinrichtung (6) die Markierdaten in aufeinanderfolgenden Sektoren in unterschiedlichen Spuren (3a, 3b) aufzeichnet, wobei die Markierdaten in jedem Sektor dss Auftreten einer entsprechenden vorbestimmten Eigenschaft und den relativen Ort auf dem zweiten Aufzeichnungsmedium angeben, sn dem die vorbestimmte Eigenschaft aufgezeichnet wird, und wobei die aufeinanderfolgenden Sektoren in den verschiedenen Spuren an Orten aufgezeichnet werden, die von den tatsächlichen Orten der betreffenden vorbestimmten Eigenschaften unabhängig sind.

10. Gerät nsch Anspruch 8, bei dem die Tastatur (8, Fig. 10) eine Aufzeichnungs-Wähleinrichtung (82) zur Auswahl eines Schneid-Eingabe-Modus aufweist, in dem die jeweiligen Markiersignale bei Betätigung der betreffenden Exemplaren aus der Mehrzahl von Schaltern (77, 78, 79) erzeugt und zusammen mit den Kodesignalen in der Speichereinrichtung (7) gespeichert werden.

11. Gerät nach Anspruch 1, umfassend

eine Wiedergabe-Einrichtung (5) zur Wiedergabe der Information von einem das Aufzeichnungsmedium (1) bildenden Magnetband (1),

eine Kodesignal-Generatoreinrichtung (5, 7) zur Erzeugung von Signalen, die in einem vorbestimmten Verhältnis zu der wiedergegebenen Information stehen,

die genannte Formatierungseinrichtung (7) zur Erzeugung der Markierdaten in einer Spur (3s, 3b) auf dem Magnetband (1), die von den Spuren (2) verschieden ist, in der die Information aufgezeichnet ist,

eine Formatwahl-Schalteinrichtung (77, 78, 79) zur Kodierung des Markiersignals für die Erzeugung eines Kennzeichnungssignals, das das Auftreten einer vorbestimmten Eigenschaft anzeigt, wobei das Kodesignal den relativen Ort auf dem Magnetband (1) angibt, an dem die vorbestimmte Eigenschaft festgestellt wird, wobei die Aufzeichnungseinrichtung (5) das Kennzeichnungssignal und das Kodesignal in einer getrennten Spur (3a, 3b) suf dem Magnetband aufzeichnet, die unabhängig ist von dem tatsächlichen Ort suf dem Magnetband (1), sn dem die vorbestimmte Eigenschaft festgestellt wurde,

wobei die Formatwahl-Schalteinrichtung (77, 78, 79) auch das Markiersignal so kodiert, daß es das Auftreten und die Identität einer vorbestimmten Eigenschaft angibt, wobei das Kodesignal den relativen Ort suf dem Magnetband (1) angibt, an dem die vorbestimmte Eigenschaft aufgetreten ist, und wobei die Formatwahl-Schalteinrichtung (77, 78, 79) ferner so betätigbar ist, daß in dem kodierten Markiersignal ein Ortsignal enthalten ist, das dem Kodesignal abgeleitet ist und wobei die Aufzeichnungseinrichtung (5) in einer getrennten Spur (3a, 3b) auf dem Magnetband (1) aufeinanderfolgende kodierte Markiersignale aufzeichnet, die Ort signale enthalten.

## Revendications

1. Appareil de production de données identifiant des caractéristiques prédéterminées d'informations enregistrées sur des pistes (2) d'un support d'enregistrement (1) et pour enregistrer lesdites données autrement que dans lesdites pistes (2), dans lesquelles lesdites informations sont enregistrées, l'appareil comportant:

un dispositif d'entrée de signaux reproduits (5) destiné à recevoir des informations reproduites à partir dudit support d'enregistrement (1);

un dispositif de signaux de code destiné à dériver des signaux de code qui changent séquentiellement en fonction de la position dudit support d'enregistrement (1) et comprenant un dispositif de reproduction de signaux de code (5) pour reproduire lesdits signaux de code à partir dudit support d'enregistrement (1);

un dispositif générateur de signaux de repérage (7, 8) destiné à produire des signaux de repérage respectifs à l'apparition de certaines respectives desdites caractéristiques prédéterminées dans lesdites informations reproduites;

un dispositif de mémoire (7) destiné à mémoriser lesdits signaux de code et lesdits signaux de repérage; et

un dispositif de mise en format (7) destiné à produire lesdites données dans un format prédéterminé en fonction desdits signaux de code mémorisés et desdits signaux de repérage;

ledit dispositif générateur de signaux de repérage (7, 8) comprenant un dispositif de clavier (8, figure 10) comprenant des dispositifs de commutateurs manuels (8) comprenant plusieurs commutateurs (77, 78, 79) pouvant être actionnés manuellement par un opérateur quand ledit opérateur détecte certaines respectives desdites caractéristiques prédéterminées dans lesdites informations reproduites de manière à produire un signal de repérage respectif, et des touches (80) pouvant être manoeuvrées sélectivement par ledit opérateur pour produire les signaux de code respectifs,

caractérisé par:

lesdites données indiquant la relation entre les apparitions desdites caractéristiques prédéterminées desdites informations et desdites informations de temps;

un dispositif de sélection destiné à sélectionner un mode en temps réel ou un mode de montage, dans lequel dans ledit mode en temps réel, lesdits signaux de repérage respectifs sont produits et mémorisés dans ledit dispositif de mémoire (7) avec lesdits signaux de code provenant dudit dispositif de signaux de code à la manoeuvre de certains respectifs desdits plusieurs commutateurs (77, 78, 79) simultanément quand lesdites informations de reproduction sont contrôlées et dans lequel, dans ledit mode de montage, lesdits signaux de repérage respectifs sont produits et mémorisés dans ledit dispositif de mémoire (7) à la manoeuvre desdits certains respectifs desdits plusieurs commutateurs (77, 78, 79) et des touches (80) ou par la manoeuvre desdites touches (80).

2. Appareil selon la revendication 1, dans lequel ledit dispositif de signaux de code comporte un dispositif réagissant à la manoeuvre manelle de certains respectifs desdits plusieurs commutateurs (77, 78, 79) en détectant ledit signal de code reproduit au moment où lesdits certains respectifs desdits plusieurs commutateurs (77, 78, 79) sont manoeuvrés.

3. Appareil selon la revendication 1, dans lequel ledit dispositif de mise en format (7) comporte un dispositif de codage comprenant un dispositif de commutation de sélecteur de format (82) commandé par ledit opérateur pour sélectionner un format voulu de données de repérage et pour coder lesdites données de repérage dans l'un sélectionné d'au moins deux formats de données de repérage parmi des signaux de repérage et lesdits signaux de code.

4. Appareil selon la revendication 3, dans lequel l'un desdits formats de données de repérage comporte un signal de marquage indiquant l'apparition d'une caractéristique prédéterminée et d'un signal de position dérivé dudit signal de code, un autre desdits formats de données de repérage comprenant des données représentant l'apparition et l'identité d'une caractéristique prédéterminée et ledit signal de position dérivé dudit signal de code.

5. Appareil selon la revendication 4, dans lequel ledit dispositif de mise en format (7) comporte en outre un dispositif d'identification de mise en format destiné à additionner les données de repérage codées et un signal d'identification de format pour identifier ledit format de données de repérage qui a été sélectionné.

6. Appareil selon l'une quelconque des revendications précédentes, dans lequel les informations enregistrées dans lesdites pistes (2) dudit support d'enregistrement (1) comportent le début, la fin et les parties prédéterminées desdites informations; et dans lequel lesdits plusieurs commutateurs (77, 78, 79) peuvent être manoeuvrés manuellement pour produire des signaux de repérage représentant le début, la fin et des parties prédéterminées respectivement.

7. Appareil selon l'une quelconque des revendications précédentes, dans lequel lesdites informations sont des informations de son.

8. Appareil selon la revendication 1, comportant:

ledit dispositif d'entrée de signaux reproduits (5) destiné à recevoir des informations reproduites et des signaux de code représentant les positions relatives sur un premier support d'enregistrement (1) auxquelles lesdites informations sont enregistrées à partir dudit premier support d'enregistrement (1) dans un dispositif de reproduction (5);

ledit circuit de sortie de signaux destiné à dériver des parties sélectionnées des informations reproduites à partir dudit premier support d'enregistrement (1) et des signaux de code représentant les positions relatives sur un second support d'enregistrement auquel lesdites informations reproduites doivent être enregistrées sur ledit second support d'enregistrement dans un dispositif d'enregistrement (6);

19

un dispositif de montage (10, 54) destiné à sélectionner des points de montage dans lesquels des parties desdites informations reproduites à partir dudit premier support d'enregistrement (1) sont enregistrées sur ledit second support d'enregistrement;

un dispositif de mémoire (28) destiné à mémoriser lesdits signaux de repérage et lesdits signaux de code représentant des positions relatives sélectionnées sur ledit second support d'enregistrement; et

un dispositif de mise en format destiné à produire des données de repérage dans un format prédéterminé en fonction des signaux de repérage mémorisés et des signaux de code;

de manière que les données de repérage enregistrées sur ledit second support d'enregistrement représentent les caractéristiques prédéterminées des informations enregistrees sur ledit second support d'enregistrement.

9. Appareil selon la revendication 8, dans lequel ledit dispositif d'enregistrement (6) a pour fonction d'enregistrer lesdites données de repérage dans des secteurs successifs de pistes différentes (3a, 3b), lesdites données de repérage dans chaque secteur représentant l'apparition d'une caractéristique prédéterminée respective et la position relative sur ledit second support d'enregistrement (1) dans lequel ladite caractéristique prédéterminée est enregistrée et des secteurs successifs étant enregistrés dans des pistes différentes (3a, 3b) dans des positions qui sont indépendantes des positions réelles des caractéristiques prédéterminées respectives.

10. Appareil selon la revendication 8, dans lequel ledit dispositif de clavier (8, figure 10), comporte un dispositif de sélection d'enregistrement (82) pour sélectionner un mode d'entrée de dispositif de montage, dans ledit mode d'entrée de dispositif de montage, lesdits signaux de repérage respectifs étant produits à la manoeuvre desdits certains respectifs desdits plusieurs commutateurs (77, 78, 79) et étant mémorisés dans ledit dispositif de mémoire (7) avec lesdits signaux de code.

11. Appareil selon la revendication 1, comportant:

un dispositif de reproduction (5) destiné à reproduire lesdites informations à partir d'une bande magnétique (1) formant ledit support d'enregistrement (1);

un dispositif générateur de signaux de code (5, 7) destiné à produire des signaux ayant une relation prédéterminée avec lesdites informations reproduites;

ledit dispositif de mise en format (7) destiné à produire lesdites données de repérage sur une piste (3a, 3b) de ladite bande (1) différente des pistes (2) dans lesquelles lesdites informations sont enregistrées;

un dispositif de commutation de sélecteur de format (77, 78, 79) ayant pour fonction de coder ledit signal de repérage pour produire un signal de marqueur indiquant l'apparition d'une caractéristique prédéterminée, dans lequel ledit signal de code représente la position relative sur ladite bande (1) à laquelle ladite caractéristique prédéterminée est détectée et ledit dispositif d'enregistrement (5) ayant pour fonction d'enregistrer ledit signal de marqueur et ledit signal de code dans une piste séparée (3a, 3b) de ladite bande (1) indépendamment de la position réelle sur ladite bande (1) à laquelle ladite caractéristique prédéterminée a été détectée; et

ledit dispositif de commutation de sélection de format (77, 78, 79) ayant également pour fonction de coder ledit signal de repérage pour représenter l'apparition et l'identité d'une caractéristique prédéterminée, dans lequel ledit signal de code représente la position relative sur ladite bande (1) à laquelle ladite caractéristique prédéterminée est apparue, ledit dispositif de sélection de format ayant en outre pour fonction d'inclure, dans ledit signal de repérage codé, un signal de position dérivé dudit signal de code et ledit dispositif d'enregistrement (5) ayant pour fonction d'enregistrer, dans une piste séparée (3a, 3b) de ladite bande (1), des signaux de repérage codés successifs comprenant des signaux de position.

EP 0 074 841 B1

| SYNC | C1 ~ C14 | D A T A |
|------|----------|---------|

← ——————————————— 1 frame ——————————————— →

## Fig. 1A

Fig. 1B

Fig. 2A

| DATA - Q | CRC |
|----------|-----|

SO,S1 ... SO,S1

| 4 | 4 | ← 72 bits → | 16 |

← 96 bits →

Mode-1

| 1 | MNR | X | MIN | SEC | 01 SEC | |

← 36 bits → | ← 36 bits → |

Fig.2B

Mode-2

| 2 | N1 N2 N3 - - - - N12 N13 | |

← 52 bits → | ← 20 bits → |

Fig.2C

1

Fig.3A

Fig.3B

Fig.3C

inner-side

outer-side

lead-in   music 1   >2 sec   music 2   <2 sec   music 3 / music 4   lead-out

information area

program area

2 sec   2 sec

P   1   0

MNR   00   01   01   02   02   03   03   04   AA

Q   X   ≠00   ∞   ≠00(e·g·01)   00   ≠00   ∞   ≠00   ≠00   ≠00

time

EP 0 074 841 B1

Fig.4

Fig.5

Fig.6

Fig. 7

4

**Fig.8C** | SYNC | IM2 | GAP4 | **Fig.8D** | SYNC | IM3 | GAP5

**Fig.8A**

12

| PRE-AMBLE | 1st SECTOR | | Nth SECTOR | MID-AMBLE | (N+1)th SECTOR | | POST-AMBLE |

13    14

| GAP-0 | SYNC | IM-1 | GAP-1 | SYNC | AM-1 | SEC-TOR NO | TAPE NO | CRC | GAP-2 | SYNC | AM-2 | DIM | LEM-GTH | DATA | CRC | GAP-3 |

— ID FIELD — — DATA FIELD —

**Fig.8B**

| SUB CODE | DIM |
|---|---|
| P | 10 |
| Q (MODE-1) | 20 |
| Q (MODE-2) | 21 |

**Fig.8E**

EP 0 074 841 B1

Fig. 9 A

Fig. 9 B

KEYBOARD **8**

TC

CHANNELS
2 4

PREEMPHASIS

NO EMP.

EMP.

LOC.POS

TAPE TIME
0 1 4 5 3 8 1 1 —72
HOURS MIN SEC FRAM

BF

PREROLL TIME
2 0 —73

EVENT DISPLAY 89
0 3 0 1 0 1 3 0 1 5 2 7
MNR INX HOURS MIN SEC FRAM

P
1
2

Q

ENTRY OR COMMENT DISPLAY 90
D E L O K ? ( Y / N )

AUDIO TRACK
1 2

PRINT OUT
TAPE VERIFY STORE

—74

MEMORY CLEAR LOAD

84
INDICATER AT REVIEW
Q Q Q Q
PAUSE BOM INX EOM

KEY PUSH OFFSET
TIME DISPLAY
85—1 0 0
MILLISEC

REVIEW INPUT SELECT

VTR CONTROL
AUTO
PREROLL

FWD
—75 83

EDIT
(P,Q)

—91 CH

AUTO
LOCATE

SHUTTLE STOP

REV PAUSE FWD

X⅕ X⅕

EVENT
SLC. 82
EDITOR
INP.

PREROLL
TIME

KEY PUSH
OFFSET

EMP. BUZZER

X1 X1

INX
REAL TIME
INP.

7 8 9

YES NO DEL

X2 X2

79

4 5 6 —80

← → ↑ —81

REW FF

EOM BOM

1 2 3

RECALL ↓

SHUTTLE DIAL

77 78
TOC DATA
GENERATOR

— 0 +

ENTER

Fig. 10

EP 0 074 841 B1

Fig.11A

music 1    pause ≧2    pause<2

lead-in | INX1 | INX2 | INX3 |  | music 2 | music 3 | music 4 | lead-out

Fig.11B

t9
t8
t6 t7
t1  t2  t3  t4  t5
TC

Fig.11C  78—BOM  INX  INX  EOM  BOM  EOM  BOM  BOM  EOM
                    79        77

Fig.11D

PTOC  P=1  P=0  P=1  P=0  P=1  P=0  P=1  P=0  P=2
      t1-2  t1   t4   t5   t7-2  t7   t8-2  t8   t9

Fig.11E
MNR   01        02        03        04        AA
      t1-2      t4        t6        t8        t9
QTOC
X     00  01  02  03  00  01   00  01    01
      t1-2  t1  t2  t3  t4  t5   t6  t7    t8

EP 0 074 841 B1